# EUROPEAN PATENT SPECIFICATION

(11) **EP 2 697 292 B1**
(45) Date of publication and mention of the grant of the patent: **16.09.2015**
(21) Application number: 12771279.2
(22) Date of filing: 05.04.2012
(51) Int. Cl.: C08J 5/18, B05D 3/06, B05D 5/00, C08J 7/00, G03G 5/147, G03G 21/10, G03G 5/05

(54) **FILM, APPARATUS HAVING FILM, ELECTROPHOTOGRAPHIC PHOTOSENSITIVE MEMBER, PROCESS CARTRIDGE, AND ELECTROPHOTOGRAPHIC APPARATUS**
FILM, VORRICHTUNG MIT DEM FILM, ELEKTROPHOTOGRAPHISCHES LICHTEMPFINDLICHES ELEMENT, PROZESSKARTUSCHE UND ELEKTROPHOTOGRAPHISCHE VORRICHTUNG
FILM, APPAREIL AYANT UN FILM, ÉLÉMENT PHOTOSENSIBLE ÉLECTROPHOTOGRAPHIQUE, CARTOUCHE DE TRAITEMENT ET APPAREIL ÉLECTROPHOTOGRAPHIQUE

(30) Priority: 12.04.2011 JP 2011088442; 20.04.2011 JP 2011094158; 17.05.2011 JP 2011110620; 09.03.2012 JP 2012053581; 03.04.2012 JP 2012085035
(43) Date of publication of application: 19.02.2014
(73) Proprietor: Canon Kabushiki Kaisha, Tokyo 146-8501 (JP)
(72) Inventor: SHIRAYAMA, Kazuhisa, Tokyo 146-8501 (JP); MIYAUCHI, Yohei, Tokyo 146-8501 (JP); YOSHIMURA, Kimihiro, Tokyo 146-8501 (JP); KIKUCHI, Toshihiro, Tokyo 146-8501 (JP)
(74) Representative: TBK
(86) International application number: PCT/JP2012/059953
(87) International publication number: WO 2012/141230

(56) References cited:
- JP-A- 4 284 239
- JP-A- 2004 337 713
- JP-A- 2005 128 510
- JP-A- 2010 026 378
- US-A1- 2009 092 916

## Description

### Technical Field

The present invention relates to a film having a novel structure and an apparatus including the film. The present invention also relates to an electrophotographic photosensitive member including the film as a surface layer and a process cartridge and an electrophotographic apparatus each including the electrophotographic photosensitive member.

### Background Art

There is a technique for controlling friction by adopting a particular surface profile. For example, in the field of industrial machine materials, PTL 1 discloses that friction between a bearing member and a shaft can be decreased by providing raised portions on the surface of the bearing member.

PTL 3 discloses that friction of a slider of a magnetic head can be decreased by providing a honeycomb texture on a surface of the slider.

In one application to an organic function member, PTL 2 discloses that asperities on a surface (outer surface) of a toner image carrier, such as an electrophotographic photosensitive member or an intermediate transfer member, can facilitate the removal of toner particles remaining on the surface and prevent a cleaning blade from becoming caught on the surface (blade curling).

PTL 4 discloses that asperities including a smooth convex protrusion on a surface of an electrophotographic photosensitive member can prevent a cleaning blade from becoming reversed.

In accordance with another technique, a member contains a lubricant to control friction.

### Citation List

### Patent Literature

PTL 1 Japanese Patent Laid-Open No. 2002-106578 PTL 2 Japanese Patent Laid-Open No. 2005-128510
PTL 3 Japanese Patent Laid-Open No. 9-219077
PTL 4 Japanese Patent Laid-Open No. 7-092697

Further, JP 2010 026378 A and US 2009/092916 A1 both disclose an electrophotographic photoreceptor.

### Summary of Invention

### Technical Problem

However, asperities on the surface may be worn away by friction for a long period of time. This increases the friction coefficient of the surface.

The present invention provides a film that is resistant to an increase in the friction coefficient resulting from the wearing of asperities after long-term use and an apparatus including the film. The present invention also provides an electrophotographic photosensitive member including the film as a surface layer and a process cartridge and an electrophotographic apparatus each including the electrophotographic photosensitive member.

### Solution to Problem

In accordance with a first aspect of the present invention as defined in claim 1, a film has a first portion and a second portion having different hardnesses, wherein the first portion has hardness (H₁ [GPa]) in the range of 0.01 to 3 GPa as determined by a continuous stiffness measurement, and the ratio (H₂/H₁) of the hardness (H₂ [GPa]) of the second portion as determined by the continuous stiffness measurement to the hardness (H₁ [GPa]) of the first portion as determined by the continuous stiffness measurement is in the range of 1.2 to 30,
the first portion forms a first surface region of the film, and the second portion forms a second surface region of the film,
each of the first portion and the second portion extends to a depth of 75% or more of the thickness of the film, and

in a 1 mm x 1 mm square region disposed on an arbitrary position of the surface of the film, the second surface region accounts for 10% to 80% by area of the square region, and the first surface region and the second surface region account for 50% or more by area of the square region.

In accordance with a second aspect of the present invention, an apparatus includes a member containing the film and a contact member configured to come into contact with a surface of the film at a certain speed.

In accordance with a third aspect of the present invention, an electrophotographic photosensitive member includes the film as a surface layer.

In accordance with a fourth aspect of the present invention, a process cartridge is detachably attachable to a main body of an electrophotographic apparatus, and the process cartridge support: an electrophotographic photosensitive member, and a cleaning unit for cleaning a surface of the electrophotographic photosensitive member. The electrophotographic photosensitive member is the electrophotographic photosensitive member according to the third aspect, and the cleaning unit has a cleaning blade configured to come into contact with a surface of the electrophotographic photosensitive member.

In accordance with a fifth aspect of the present invention, an electrophotographic apparatus comprises: an electrophotographic photosensitive member, a charging unit, an exposure unit, a developing unit, a transfer unit, and a cleaning unit for cleaning a surface of the electrophotographic photosensitive member. The electrophotographic photosensitive member is the electrophotographic photosensitive member according to the third aspect, and the cleaning unit has a cleaning blade coming into contact with the surface of the electrophotographic photosensitive member.

### Advantageous Effects of Invention

In the film according to the first aspect of the present invention, the first portion has a lower hardness and is more easily worn away than the second portion. Thus, repeated use of the film depresses the first portion and raises the second portion. These asperities can result in the surface area of the film in contact with a contact member being decreased and friction between the film and the contact member being decreased. Repeated use of the film wears away the first portion having low hardness rather than the second portion having high hardness. This allows the asperities including the raised second portion to be maintained such that a difference in height between the first portion and the second portion is substantially constant even with long-term use. Thus, the film can have a low friction coefficient for a long period of time.

### Brief Description of Drawings

Fig. 1 is a top view of a film according to an embodiment of the present invention.
Fig. 2 is a cross-sectional view of the film.
Fig. 3 is a cross-sectional view of a film having asperities according to an embodiment of the present invention.
Fig. 4 is a top view of a film according to another embodiment of the present invention.
Fig. 5 is a top view of a film according to still another embodiment of the present invention.
Fig. 6 is a cross-sectional view of the film illustrated in Fig. 5.
Fig. 7 is a cross-sectional view of a film having asperities according to still another embodiment of the present invention in which a lubricant abrasion powder accumulates in depressed portions.
Fig. 8 is a schematic view of a square nickel mesh or a plain-woven stainless steel mesh each having a certain line width and a certain opening size.
Fig. 9 is a schematic view of a honeycomb nickel mesh having a certain line width and a certain opening size.
Fig. 10 is a schematic view illustrating a method for placing a photomask around a surface of an electrophotographic photosensitive member.
Fig. 11 is a schematic view illustrating a method for measuring the friction coefficient by making a urethane rubber blade abut against an electrophotographic photosensitive member.
Fig. 12 is a schematic view of an electrophotographic apparatus that includes a process cartridge having an electrophotographic photosensitive member according to an embodiment of the present invention.

### Description of Embodiments

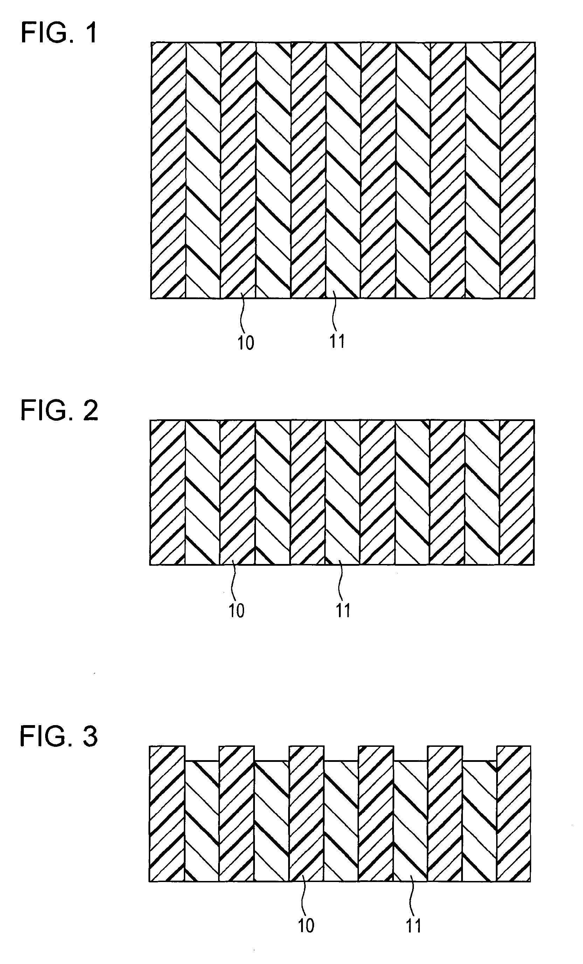

Fig. 1 is a top view of a film according to an embodiment of the present invention. Fig. 2 is a cross-sectional view of the film. Fig. 3 is a cross-sectional view of a film having asperities according to an embodiment of the present invention. In Figs. 1 to 3, the film has a second portion 10 and a first portion 11. In Figs. 2 and 3, the top of the film comes into contact with a contact member.

The first portion 11 has a lower hardness than the second portion 10, and is more easily worn away than the second portion with use while the film is in contact with the contact member at a certain speed. As illustrated in Fig. 3, this results in asperities including raised portions each formed of the second portion 10 and depressed portions each formed of the first portion 11. The asperities can result in the surface area of the film in contact with the contact member being decreased and friction between the film and the contact member being decreased. The wearing of the second portion 10 synchronously induces the wearing of the first portion 11, thereby maintaining the asperities for a long period of time. Thus, the surface of the film can have a low friction coefficient for a long period of time.

Variations in appearance caused by light scattering can be decreased by substantially equalizing the refractive index of the first portion 11 with the refractive index of the second portion 10. This can reduce the deterioration of resolution in optical members. Thus, the present invention can be suitably embodied in electrophotographic applications.

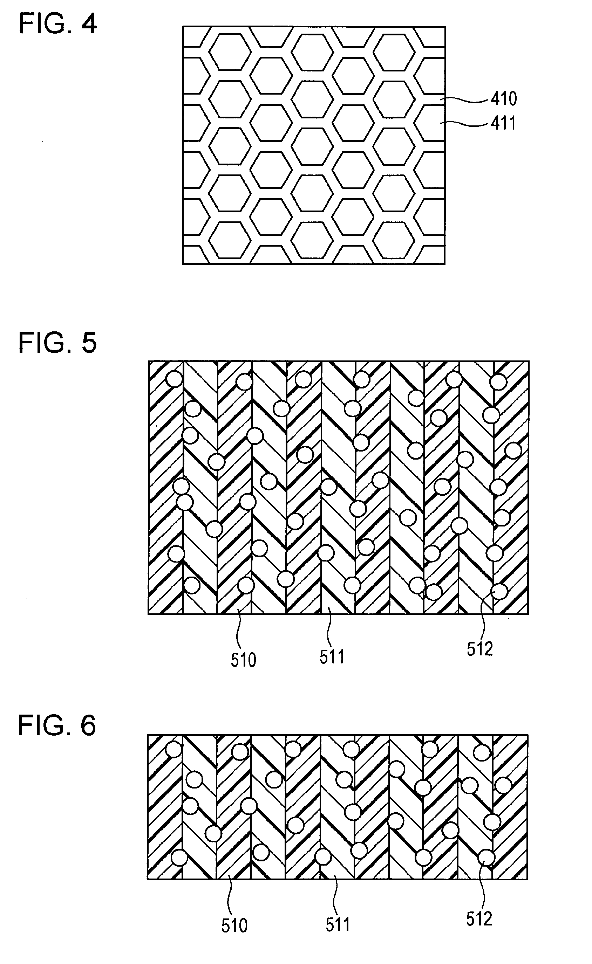

As illustrated in Fig. 4, a first surface region formed of a first portion 411 may be surrounded by a second surface region formed of a second portion 410. Fig. 4 is a top view of a film according to another embodiment of the present invention. Repeated use of the film depresses the first portion 411 (the first surface region formed of the first surface region 411) and raises the second portion 410. Thus, air can be trapped in a closed space between the depressed first portion, the raised second portion, and the contact member. The compression of the air produces repulsive force. The repulsive force can decrease the load pressure (the contact pressure between the film and the contact member) and thereby further decrease the friction between the film and the contact member. Here, the closed space means a closed space formed by the depressed first portion 411 and a contact member when a film comes in contact with the contact member.

A film according to an embodiment of the present invention may be manufactured by irradiating a polymer film made of a monomer of an ultraviolet-curable resin or an electron beam curable resin, such as an acrylate, an unsaturated polyester, an epoxy, an oxetane, or a vinyl ether, (and a lubricant described below, if necessary) with ultraviolet rays or an electron beam through a photomask or an electron beam mask. The first portion and the second portion may be formed by altering the cross-linking density of the polymer film so as to have different hardnesses.

Examples of the monomer of the ultraviolet-curable resin or the electron beam curable resin include, but are not limited to, the following compounds.

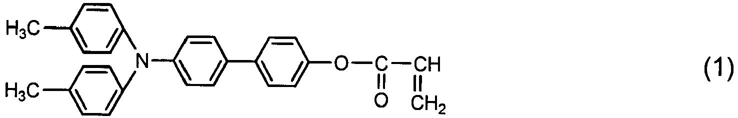

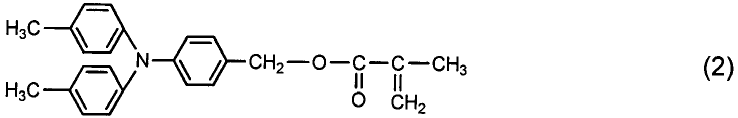

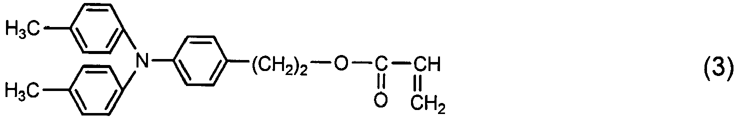

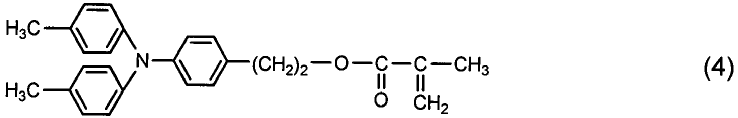

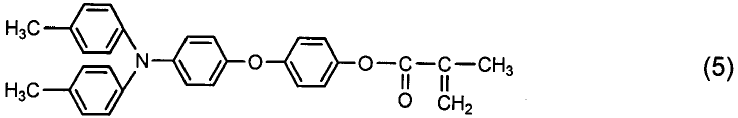

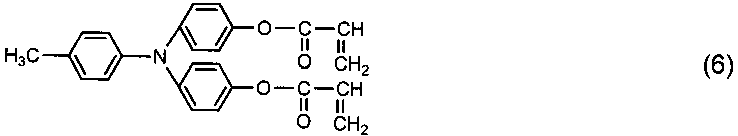

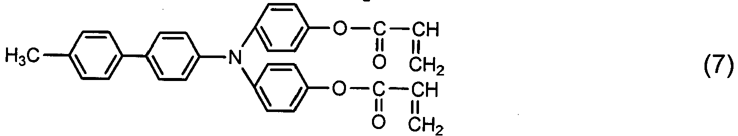

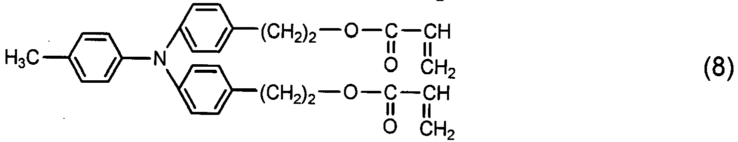

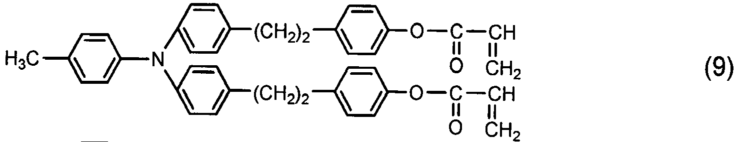

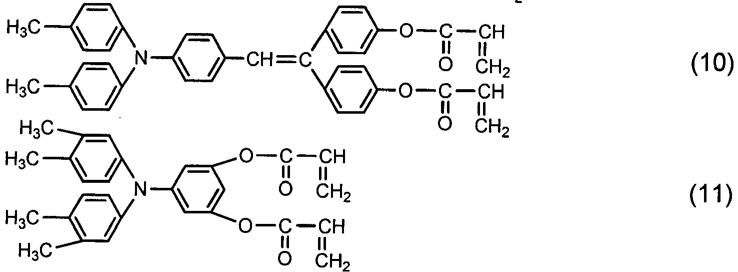

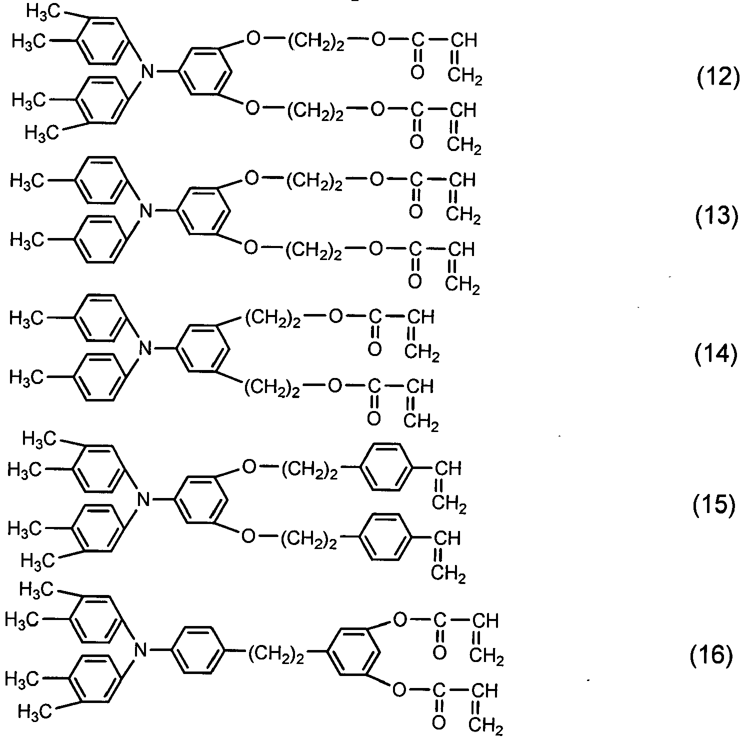

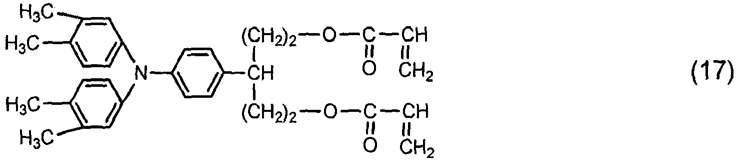

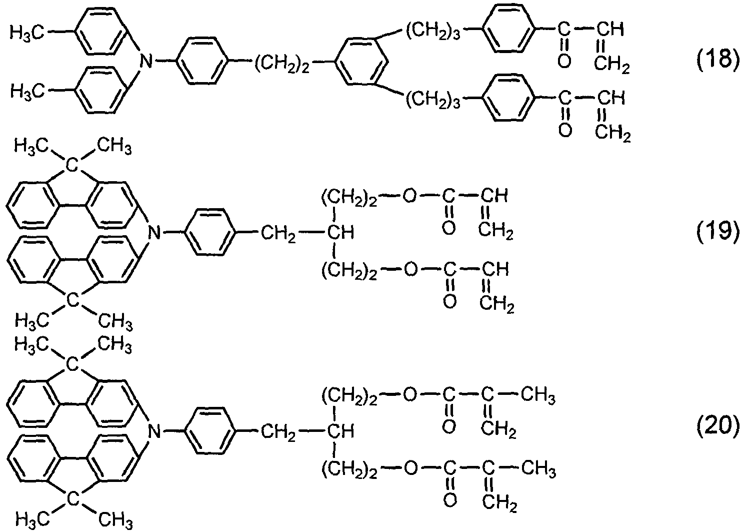

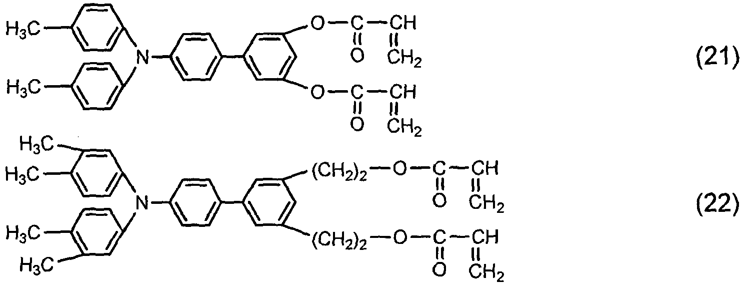

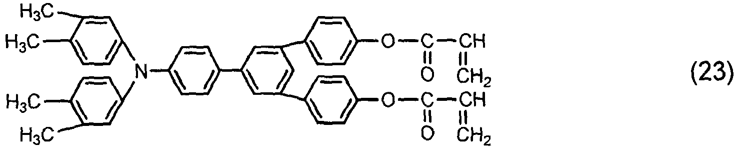

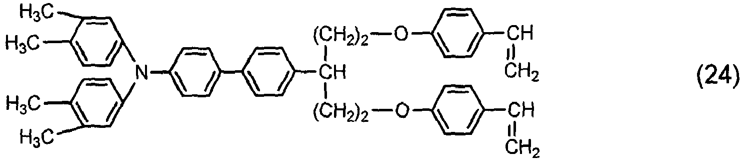

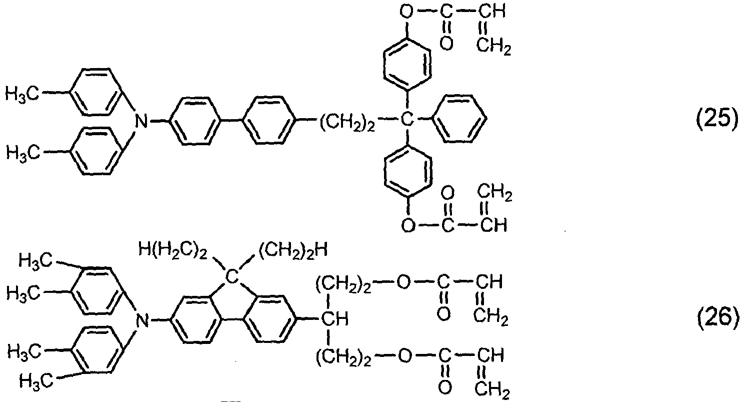

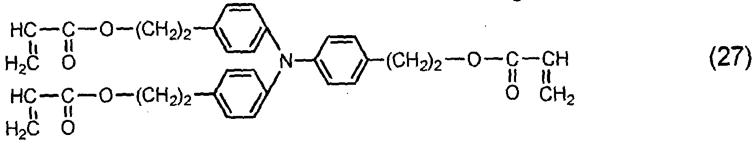

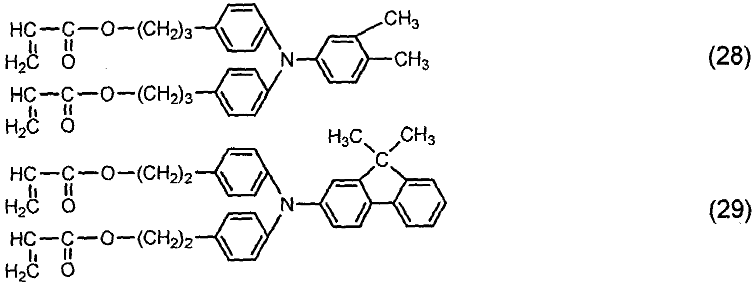

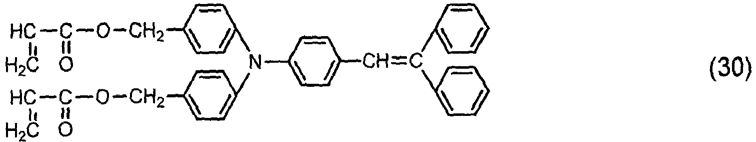

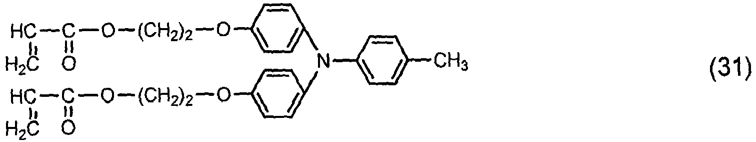

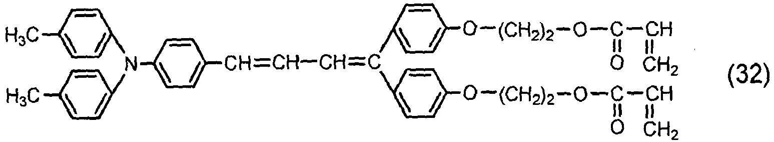

A film according to an embodiment of the present invention may also be manufactured by pouring a solution of polycarbonate, polyarylate, polystyrene, polyethylene, or another resin (and a lubricant described below, if necessary) into a brass pinholder having many fine micrometer- or even nanometer-size rods in a certain direction and drying the solution.

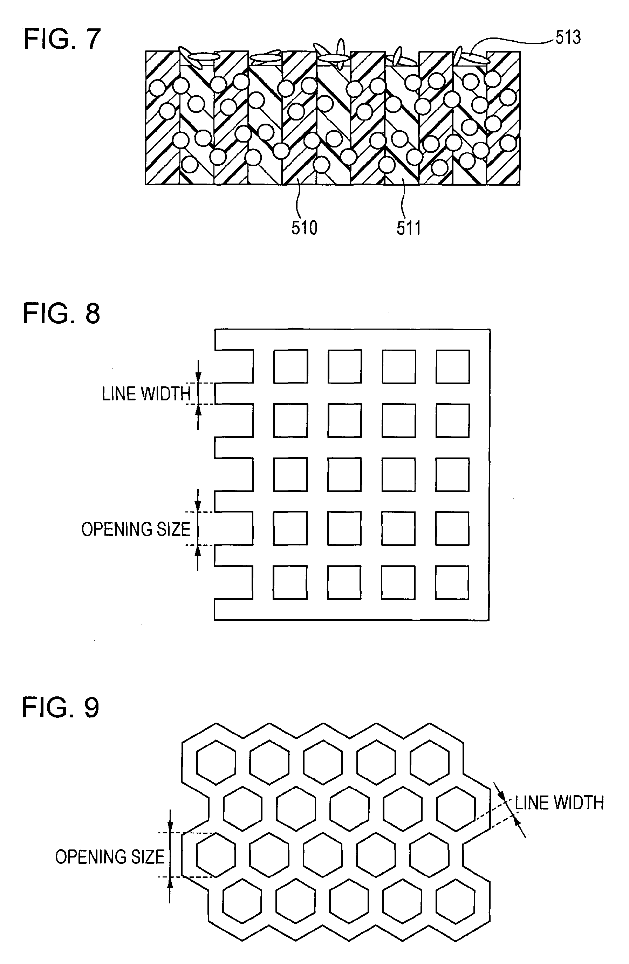

As illustrated in Figs. 5 to 7, the film may contain a lubricant. Fig. 5 is a top view of a film according to still another embodiment of the present invention. Fig. 6 is a cross-sectional view of the film illustrated in Fig. 5. Fig. 7 is a cross-sectional view of a film having asperities according to still another embodiment of the present invention in which a lubricant abrasion powder accumulates in depressed portions. In Figs. 6 and 7, the top of the film comes into contact with a contact member. The wearing of the film containing a lubricant 512 produces a lubricant abrasion powder 513 on the surface of the film, as illustrated in Fig. 7. The lubricant abrasion powder 513 is accumulated in a depressed first portion 511 between raised second portions 510 and remains on the friction surface for a long period of time. The lubricant abrasion powder 513 can further decrease the friction coefficient of the surface of the film and maintain a low friction coefficient for a long period of time. In order to decrease friction between the film and the contact member with the lubricant abrasion powder accumulated in the depressed portion, a first surface region formed of the first portion 511 may be surrounded by a second surface region formed of the second portion 510. Repeated use of the film depresses the first portion 511 (the first surface region) and raises the second portion 510. The lubricant abrasion powder accumulated in a closed space constituted by the depressed first portion 511 and the surrounding raised second portion 510 can further prevent the lubricant abrasion powder from flowing out of the wearing surface. The lubricant 512 may be contained in at least one of the first portion 511 and the second portion 510.

The lubricant 512 may be solid or semisolid.

Examples of the solid lubricant include, but are not limited to, particles of polymerized fluorine-containing compounds, layered oxides, such as mica and talc, layered hydrocarbon compounds, such as graphite, metal sulfides, such as molybdenum disulfide, silicone, melamine cyanurate, and boron nitride. Examples of the fluorine-containing compounds include, but are not limited to, tetrafluoroethylene, chlorotrifluoroethylene, hexafluoroethylenepropylene, vinyl fluoride, vinylidene fluoride, and chlorodifluoroethylene. The solid lubricant may be tetrafluoroethylene polymer particles, that is, polytetrafluoroethylene particles.

The lubricant in the form of particles may have an average particle size in the range of 0.01 to 10 µm.

Examples of the semisolid lubricant include, but are not limited to, fluorine grease (thickener: polytetrafluoroethylene or the like, base oil: perfluoropolyether or the like), silicone grease (thickener: lithium soap or the like, base oil: phenylmethylpolysiloxane, dimethylpolysiloxane, or the like), fluorosilicone grease (thickener: lithium soap or the like, base oil: fluorosilicone or the like), ester grease (thickener: urea, lithium soap, or the like), and polyphenyl ether grease containing a polyphenyl ether, such as pentaphenyl ether or tetraphenyl ether, as a base oil (thickener: bentonite or the like).

The lubricant content of the film may be 20% by volume or less of the volume of the film. An increase in the lubricant content of the film tends to make it more difficult to make a difference in hardness between the first portion and the second portion of the film by ultraviolet or electron beam irradiation. These lubricants may be used alone or in combination or may be used in combination with a dispersant.

The size of the lubricant may be equal to or smaller than the size of the second portion. An increase in the size of the lubricant tends to make it more difficult to make a difference in hardness between the first portion and the second portion of the film by ultraviolet or electron beam irradiation.

The first portion and the second portion may have any shape so as to result in decreases in the surface area of the film in contact with a contact member and friction between the film and the contact member. In the case that the first portion forms a depressed portion and the second portion forms a raised portion, the shape may be a hole form, a pillar form, a line and space (L&S) form, a square form, or a honeycomb form. In order to decrease friction between the film and a contact member by the action of air trapped in a closed space or prevent a lubricant abrasion powder accumulated in a closed space from flowing out of the wearing surface, the closed space may be of a hole form, a square form, or a honeycomb form, particularly a honeycomb form, as viewed from the top.

As described above, in a 1 mm x 1 mm square region disposed on an arbitrary position of the surface of the film, the second surface region accounts for 10% to 80% by area of the square region and preferably 20% to 70% so as to more effectively decrease friction and wearing. When the second surface region accounts for less than 10% by area, the raised second portion has too small a contact area to support the load of the contact member and may be broken. When the second surface region accounts for more than 80% by area, the second portion has a large contact area with the contact member, resulting in an insufficient friction decreasing effect and a high friction coefficient.

As described above, in a 1 mm x 1 mm square region disposed on an arbitrary position of the surface of the film, the first surface region and the second surface region account for 50% or more by area, preferably 90% or more by area, more preferably 100% by area, of the square region. When the first surface region and the second surface region account for less than 50% by area, the asperities including the depressed first portion and the raised second portion cannot maintain a low friction coefficient of the film for a long period of time.

As described above, the ratio (H₂/H₁) of the hardness (H₂ [GPa]) of the second portion as determined by a continuous stiffness measurement to the hardness (H₁ [GPa]) of the first portion as determined by the continuous stiffness measurement is in the range of 1.2 to 30 and is preferably in the range of 1.5 to 30 so as to more appropriately maintain a difference in height between the first portion and the second portion. When the ratio (H₂/H₁) of the hardness (H₂ [GPa]) of the second portion as determined by a continuous stiffness measurement to the hardness (H₁ [GPa]) of the first portion as determined by the continuous stiffness measurement is less than 1.2, this results in a small difference in wearing speed and accordingly a small difference in height between the first portion and the second portion, thus producing an insufficient friction decreasing effect. When the ratio (H₂/H₁) of the hardness (H₂ [GPa]) of the second portion as determined by a continuous stiffness measurement to the hardness (H₁ [GPa]) of the first portion as determined by the continuous stiffness measurement is more than 30, this results in a large difference in height between the first portion and the second portion, and the raised second portion cannot support the load of the contact member and may be broken.

As described above, the hardness (H₁ [GPa]) of the first portion as determined by the continuous stiffness measurement is in the range of 0.01 to 3 GPa. When the hardness (H₁ [GPa]) of the first portion as determined by a continuous stiffness measurement is 0.01 GPa or more, a difference in height between the first portion and the second portion can be appropriately maintained. When the hardness (H₁ [GPa]) of the first portion as determined by a continuous stiffness measurement is 3 GPa or less, repeated use of the film can appropriately raise the second portion.

As described above, each of the first portion and the second portion extends to a depth of 75% or more of the thickness of the film. In order to maintain the asperities including the depressed first portion and the raised second portion for a longer period of time, each of the first portion and the second portion may extend to a depth of 90% or more of the thickness of the film. Each of the first portion and the second portion may pass through the film (extend to a depth of 100% of the thickness of the film). When each of the first portion and the second portion extends to a depth of less than 75% of the thickness of the film, the asperities including the depressed first portion and the raised second portion cannot be maintained for a long period of time.

The film may have a thickness in the range of 1 to 100 µm.

In the case that the first portion becomes a space depressed portion and the second portion becomes a linear raised portion with use, the first portion and the second portion may have a size in the range of 0.1 to 50 µm. The size of the second portion may be the width of the line in the line and space form, the hole diameter in the hole form, the pillar diameter in the pillar form, or a distance between opposite apexes in the honeycomb form. For another shape, the size of the second portion may be the smallest width in a continuous region of the second portion on the surface of the film.

In the case that the first surface region is surrounded by the second surface region, the maximum size of the closed space surrounded by the raised second portion may be in the range of 0.1 to 100 µm so that trapped air can decrease friction between the film and a contact member. The term "the maximum size of the closed space", as used herein, refers to the hole diameter for the closed space of a circular hole form or the maximum distance between opposite apexes for the closed space of a honeycomb form. For the closed space of another form, the maximum size of the closed space is the maximum distance between two parallel lines that are in contact with the periphery of the closed space.

These sizes may easily be determined with an image analyzing apparatus, such as an image analyzing apparatus manufactured by Nireco Corp. (trade name: Luzex AP).

Unless otherwise specified, the hardness of a film is measured by a continuous stiffness measurement. More specifically, the hardness of a film can be measured with an ultramicro hardness tester by the continuous stiffness measurement. The hardness of the first portion measured by the continuous stiffness measurement is herein referred to as H₁ [GPa], and the hardness of the second portion measured by the continuous stiffness measurement is herein referred to as H₂ [GPa]. In accordance with the continuous stiffness measurement, under the influence of micro vibration of an indenter during an indentation test, the response amplitude and the phase difference are measured as a function of time. With a continuous variation of the indentation depth, the initial gradient upon unloading is continuously determined. More specifically, a sample is subjected to an indentation loading/unloading test with a Berkovich indenter to obtain a load-indentation depth chart.

The area percentages of the first surface region and the second surface region can be calculated by detecting the deflection amplitude of a cantilever varying with a difference in surface viscoelasticity under the influence of vertical micro vibration of a sample to obtain a viscoelastic profile.

The present invention can be suitably embodied in electrophotographic applications. A film according to an embodiment of the present invention can be suitably used as a surface layer (outermost layer), such as a charge-transport layer or a protective layer, of an electrophotographic photosensitive member. In this case, the contact member may be a cleaning blade. The cleaning blade is generally made of urethane rubber.

The present invention can also be suitably embodied in functional components of automobiles. For example, a film according to an embodiment of the present invention may be applied to a surface of a windshield wiper or an openable and closable windowpane, with which a contact member comes into contact at a certain speed so as not to pass raindrops or snowflakes therebetween. A film according to an embodiment of the present invention may also be applied to the contact member that comes into contact with the windshield wiper or the windowpane.

The material and the layer structure of an electrophotographic photosensitive member will be described below.

An electrophotographic photosensitive member generally includes a support and a photosensitive layer disposed on the support.

The photosensitive layer may be a monolayer photosensitive layer that contains a charge-transport substance and a charge-generating substance or a multilayer (function-separated) photosensitive layer that includes a charge-generating sublayer containing a charge-generating substance and a charge-transport sublayer containing a charge-transport substance. The multilayer photosensitive layer has excellent electrophotographic characteristics. The multilayer photosensitive layer may be a normal photosensitive layer in which the charge-generating sublayer and the charge-transport sublayer are stacked on a support in this order and a reversed photosensitive layer in which the charge-transport sublayer and the charge-generating sublayer are stacked on the support in this order. The normal photosensitive layer has excellent electrophotographic characteristics. The charge-generating sublayer or the charge-transport sublayer may be a multilayer.

The support has high electrical conductivity (electroconductive support) and may be a metallic (alloy) support, for example, made of aluminum, an aluminum alloy, or stainless steel. The support may also be a metallic support or a plastic support each having an aluminum, aluminum alloy, or indium oxide-tin oxide alloy film formed by vacuum evaporation. The support may also be a plastic or paper support containing electroconductive particles, such as carbon black, tin oxide particles, titanium oxide particles, or silver particles, or a support made of an electroconductive binder resin. The support may be cylindrical or belt-shaped.

An electroconductive sublayer for preventing interference fringes caused by laser beam scattering or covering scratches of the support may be disposed between the support and the photosensitive layer (the charge-generating sublayer or the charge-transport sublayer) or an undercoat layer described below.

The electroconductive sublayer may be formed by applying a coating liquid for the electroconductive sublayer and drying and/or curing the coating liquid. The coating liquid for the electroconductive sublayer may be prepared by dispersing electroconductive particles, such as carbon black, metal particles, or metal oxide particles, and a binder resin in a solvent.

Examples of the binder resin for use in the coating liquid for the electroconductive sublayer include, but are not limited to, phenolic resin, polyurethane, polyamide, polyimide, polyamideimide, poly(amic acid), poly(vinyl acetal), epoxy resin, acrylic resin, melamine resin, and polyester.

Examples of the solvent for use in the coating liquid for the electroconductive sublayer include, but are not limited to, organic solvents, such as alcohols, sulfoxides, ketones, ethers, esters, aliphatic halogenated hydrocarbons, halogenated aromatic compounds, and aromatic compounds.

The electroconductive sublayer preferably has a thickness in the range of 1 to 40 µm, more preferably 2 to 20 µm.

An undercoat layer having a barrier function or an adhesive function to improve the adhesion of the photosensitive layer, improve charge injection from the support, or prevent the electrical breakdown of the photosensitive layer may be disposed between the support or the electroconductive sublayer and the photosensitive layer (the charge-generating sublayer or the charge-transport sublayer).

The undercoat layer may be formed by applying a coating liquid for the undercoat layer and drying and/or curing the coating liquid. The coating liquid for the undercoat layer may be prepared by dissolving a resin (binder resin) in a solvent.

Examples of the resin for use in the coating liquid for the undercoat layer include, but are not limited to, acrylic resin, ally resin, alkyd resin, ethylcellulose resin, an ethylene-acrylic acid copolymer, epoxy resin, casein resin, silicone resin, gelatin resin, phenolic resin, butyral resin, polyacrylate, polyacetal, polyamideimide, polyamide, poly(allyl ether), polyimide, polyurethane, polyester, polyethylene, polycarbonate, polystyrene, polysulfone, poly(vinyl alcohol), polybutadiene, polypropylene, and urea resin.

The undercoat layer may also be formed of aluminum oxide.

Examples of the solvent for use in the coating liquid for the undercoat layer include, but are not limited to, alcohols, sulfoxides, ketones, ethers, esters, aliphatic halogenated hydrocarbons, and aromatic compounds.

The undercoat layer preferably has a thickness in the range of 0.05 to 7 µm, more preferably 0.1 to 2 µm.

The charge-generating substance for use in the electrophotographic photosensitive member include, but are not limited to, azo pigments, such as monoazo, disazo, and trisazo; phthalocyanine pigments, such as metal phthalocyanine and nonmetal phthalocyanine; indigo pigments, such as indigo and thioindigo; perylene pigments, such as perylene acid anhydride and perylene acid imide; polycyclic quinone pigments, such as anthraquinone and pyrenequinone; squarylium dyes; pyrylium salts and thiapyrylium salts; triphenylmethane dyes; inorganic substances, such as selenium, selenium-tellurium, and amorphous silicon; quinacridone pigments; azulenium salt pigments; cyanine dyes; xanthene dyes; quinoneimine dyes; styryl dyes; cadmium sulfide; and zinc oxide. These charge-generating substances may be used alone or in combination.

In the case that the photosensitive layer is a multilayer photosensitive layer, examples of the binder resin for use in the charge-generating sublayer include, but are not limited to, acrylic resin, ally resin, alkyd resin, epoxy resin, diallyl phthalate resin, silicone resin, a styrene-butadiene copolymer, phenolic resin, butyral resin, benzal resin, polyacrylate, polyacetal, polyamideimide, polyamide, poly(allyl ether), polyarylate, polyimide, polyurethane, polyester, polyethylene, polycarbonate, polystyrene, polysulfone, poly(vinyl acetal), polybutadiene, polypropylene, methacrylate resin, urea resin, a vinyl chloride-vinyl acetate copolymer, and vinyl acetate resin. The binder resin may be butyral resin. These binder resins may be used alone or in combination as a mixture or a copolymer.

The charge-generating sublayer may be formed by applying a coating liquid for the charge-generating sublayer and drying and/or curing the coating liquid. The coating liquid for the charge-generating sublayer may be prepared by dispersing a charge-generating substance and a binder resin in a solvent. The dispersion may be performed with a homogenizer, an ultrasonic homogenizer, a ball mill, a sand mill, a rolling mill, a vibrating mill, an attritor, or a liquid-collision high-speed disperser. The ratio of the charge-generating substance to the binder resin may be in the range of 1:0.5 to 1:4 (mass ratio).

Examples of the solvent for use in the coating liquid for the charge-generating sublayer include, but are not limited to, organic solvents, such as alcohols, sulfoxides, ketones, ethers, esters, aliphatic halogenated hydrocarbons, halogenated aromatic compounds, and aromatic compounds.

The charge-generating sublayer preferably has a thickness in the range of 0.001 to 6 µm, more preferably 0.01 to 2 µm.

The charge-generating sublayer may contain an intensifier, an antioxidant, an ultraviolet absorber, and/or a plasticizer, if necessary.

Examples of the charge-transport substance for use in the electrophotographic photosensitive member include, but are not limited to, triarylamine compounds, hydrazone compounds, styryl compounds, stilbene compounds, pyrazoline compounds, oxazole compounds, thiazole compounds, and triarylmethane compounds. These charge-transport substances may be used alone or in combination.

In the case that the photosensitive layer is a multilayer photosensitive layer, examples of the binder resin for use in the charge-transport sublayer include, but are not limited to, acrylic resin, acrylonitrile resin, ally resin, alkyd resin, epoxy resin, silicone resin, phenolic resin, phenoxy resin, butyral resin, polyacrylamide, polyacetal, polyamideimide, polyamide, poly(allyl ether), polyarylate, polyimide, polyurethane, polyester, polyethylene, polycarbonate, polystyrene, polysulfone, poly(vinyl butyral), poly(phenylene oxide), polybutadiene, polypropylene, methacrylate resin, urea resin, poly(vinyl chloride) resin, and vinyl acetate resin. The binder resin may be polyarylate or polycarbonate. These resins may be used alone or in combination as a mixture or a copolymer.

The charge-transport sublayer may be formed by applying a coating liquid for the charge-transport sublayer and drying and/or curing the coating liquid. The coating liquid for the charge-transport sublayer may be prepared by dissolving a charge-transport substance and a binder resin in a solvent. The ratio of the charge-transport substance to the binder resin may be in the range of 2:1 to 1:2 (mass ratio).

Examples of the solvent for use in the coating liquid for the charge-transport sublayer include, but are not limited to, ketones, such as acetone and methyl ethyl ketone; esters, such as methyl acetate and ethyl acetate; aromatic hydrocarbons, such as toluene and xylene; ethers, such as 1,4-dioxane and tetrahydrofuran; and halogen-substituted hydrocarbons, such as chlorobenzene, chloroform, and carbon tetrachloride.

The charge-transport sublayer preferably has a thickness in the range of 5 to 30 µm, more preferably 6 to 25 µm.

The charge-transport sublayer may contain an antioxidant, an ultraviolet absorber, and/or a plasticizer, if necessary.

In the case that the photosensitive layer is a monolayer, the monolayer photosensitive layer may be formed by applying a coating liquid for the monolayer photosensitive layer and drying and/or curing the coating liquid. The coating liquid for the monolayer photosensitive layer may be prepared by dispersing the charge-generating substance, the charge-transport substance, and the binder resin in the solvent.

A protective layer for protecting the photosensitive layer may be disposed on the photosensitive layer. The protective layer may be formed by applying a coating liquid for the protective layer and drying and/or curing the coating liquid. The coating liquid for the protective layer may be prepared by dissolving the binder resin in a solvent.

The protective layer preferably has a thickness in the range of 0.01 to 10 µm, more preferably 0.1 to 7 µm.

These coating liquids may be applied by dip coating, spray coating, spinner coating, roller coating, Mayer bar coating, or blade coating.

In general, a contact member serving as a cleaning blade is strongly pressed against the surface of an electrophotographic photosensitive member to remove residual toner. Strongly pressing the contact member increases the rotation torque of the electrophotographic photosensitive member. Strongly pressing the contact member is likely to destroy asperities (particularly raised portions) formed on the surface of the electrophotographic photosensitive member.

A film according to an embodiment of the present invention can be used as a surface layer of an electrophotographic photosensitive member to decrease friction between the electrophotographic photosensitive member and a contact member and consequently decrease the rotation torque of the electrophotographic photosensitive member. A film according to an embodiment of the present invention used as a surface layer of an electrophotographic photosensitive member can also retain asperities on the surface for a long period of time. The asperities can result in a decrease in friction between the electrophotographic photosensitive member and a contact member and prevent cleaning blade from becoming caught on the surface layer (blade curling).

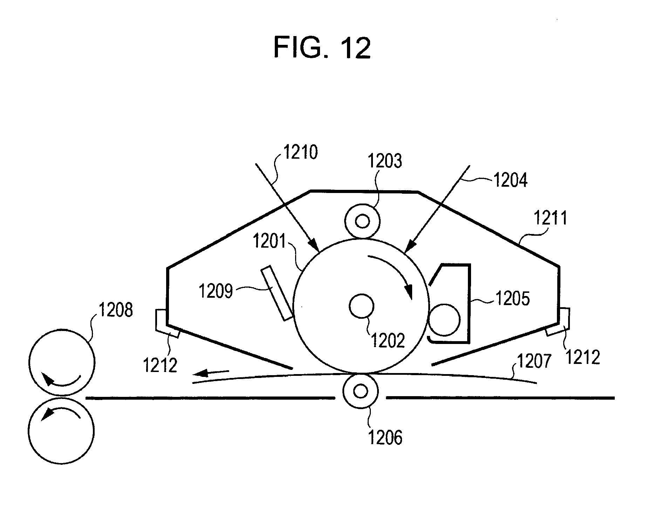

Fig. 12 is a schematic view of an electrophotographic apparatus that includes a process cartridge having an electrophotographic photosensitive member according to an embodiment of the present invention.

In Fig. 12, a cylindrical electrophotographic photosensitive member 1201 according to an embodiment of the present invention is rotated about a shaft 1202 in the direction of the arrow at a predetermined peripheral speed.

The rotating surface of the electrophotographic photosensitive member 1201 is positively or negatively charged by a charging unit 1203 and is then exposed to exposure light (image exposure light) 1204 emitted from an exposure unit (not shown). Thus, an electrostatic latent image of a target image is formed on the surface of the electrophotographic photosensitive member 1201. The charging unit may be a corona charging unit including a corotron or a scorotron or a contact charging unit including a roller, a brush, or a film. The voltage applied to the charging unit may be a direct-current voltage alone or a direct-current voltage on which an alternating voltage is superimposed. The exposure unit may be a slit exposure unit or a laser beam scanning exposure unit.

The electrostatic latent image formed on the surface of the electrophotographic photosensitive member 1201 is developed with toner of the developing unit 1205 to form a toner image. The development involves the contact or noncontact of magnetic or nonmagnetic single-component or two-component toner. Examples of the toner include, but are not limited to, polymerized toner manufactured by suspension polymerization or emulsion polymerization and spheroidized toner manufactured by mechanical grinding or spheroidizing. The toner may have a weight average particle size in the range of 4 to 7 µm and an average circularity in the range of 0.95 to 0.99.

The toner image formed on the surface of the electrophotographic photosensitive member 1201 is transferred to a medium (such as a paper sheet) 1207 by a transfer unit 1206. The medium 1207 is fed by a medium supply unit (not shown) between the electrophotographic photosensitive member 1201 and the transfer unit 1206 (contact portion) in synchronism with the rotation of the electrophotographic photosensitive member 1201.

The medium 1207 to which the toner image has been transferred is separated from the surface of the electrophotographic photosensitive member 1201. The toner image is then fixed by a fixing unit 1208. The image-formed medium (print or copy) is then output from the electrophotographic apparatus.

After the toner image has been transferred to the medium, residual toner on the surface of the electrophotographic photosensitive member 1201 is removed with a cleaning blade 1209 of a cleaning unit. The electricity on the surface of the electrophotographic photosensitive member 1201 is then removed with preexposure light 1210 emitted from a preexposure unit (not shown). The electrophotographic photosensitive member 1201 is then used in the next image forming.

Components selected from the electrophotographic photosensitive member 1201, the charging unit 1203, the developing unit 1205, the transfer unit 1206, and the cleaning unit (cleaning blade 1209) may be housed in a container as a process cartridge. The process cartridge may be detachably attached in a main body of an electrophotographic apparatus. In Fig. 12, the electrophotographic photosensitive member 1201, the charging unit 1203, the developing unit 1205, and the cleaning blade 1209 are integrated into a process cartridge 1211, which is detachably attachable to the main body of the electrophotographic apparatus through a guide unit 1212, such as a rail, of the main body of the electrophotographic apparatus.

### Examples

Although the present invention will be further described in the following examples, the present invention is not limited to these examples.

### (1) Measurement of Hardness

An ultramicro hardness tester manufactured by MTS Systems Corp. (trade name: Nano Indenter DCM) was used in the measurement of hardness by the continuous stiffness measurement. The continuous stiffness measurement was performed with a Berkovich indenter made of diamond at room temperature (25°C) in the atmosphere.

### (2) Calculation of Area Percentage of Second Portion

The area percentage of the second surface region was measured with a scanning probe microscope manufactured by SII NanoTechnology Inc. (trade name: S-image).

### (3) Preparation of Film

### Example 1-1

A photosensitive silicone polymer serving as a negative photoresist material manufactured by Shin-Etsu Chemical Co., Ltd. (trade name: SINR-3170PX) was applied to a silicon wafer by spinner coating to form a coating film. The coating film was then irradiated twice with ultraviolet rays. The first ultraviolet irradiation was performed over the entire surface of the coating film. The second ultraviolet irradiation was performed using a photomask having a line width of 4 µm and a space width of 4 µm. The first and second ultraviolet irradiances and irradiation times were determined such that the ratio of the hardness of a second portion (high hardness portion) to the hardness of a first portion (low hardness portion) was approximately 1.5 and that the hardness of the first portion (low hardness portion) was approximately 0.15 GPa. The coating film was then dried at 90°C for 2 minutes. The dried film had a thickness of 17 µm.

In a 1 mm x 1 mm square region disposed on an arbitrary position of the surface of the film, a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 1-2

A film was prepared in the same manner as in Example 1-1 except that the first and second ultraviolet irradiances and irradiation times were determined such that the ratio of the hardness of the second portion (high hardness portion) to the hardness of the first portion (low hardness portion) was approximately 1.2 and that the hardness of the first portion (low hardness portion) was approximately 0.15 GPa. The dried film had a thickness of 16 µm.

In a 1 mm x 1 mm square region disposed on an arbitrary position of the surface of the film, a second surface region formed of the second portion (high hardness portion) accounted for 53% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.2, and the hardness of the first portion (low hardness portion) was 0.16 GPa. Both the first portion (low hardness portion) and the second portion (high hardness portion) passed through the film.

### Example 1-3

A coating liquid for a charge-transport layer having the following composition was applied to a 100 mm x 100 mm x 0.75 mm aluminum sheet by Mayer bar coating and was dried to form the charge-transport layer having a thickness of 20 µm.
- Coating liquid for the charge-transport layer
   Bisphenol Z polycarbonate: 10 parts by mass
   Compound having the following structural formula (101) (charge-transport substance): 9 parts by mass 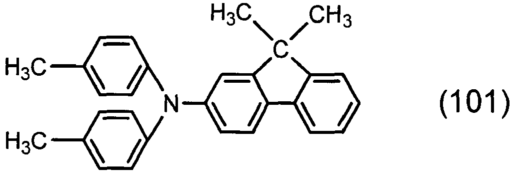
   Chlorobenzene: 100 parts by mass

A coating liquid for a surface layer having the following composition was applied to the charge-transport layer by spray coating to form a coating film having a thickness of 5 µm.
- Coating liquid for the surface layer
   Compound having the structural formula (28) (radical polymerizable compound having a charge-transport structure): 10 parts by mass
   Trimethylolpropane triacrylate: 10 parts by mass
   2,2-dimethoxy-1,2-diphenylethane-1-one (photopolymerization initiator, trade name: IRGACURE 651, manufactured by BASF): 1 part by mass
   Chlorobenzene: 100 parts by mass

The coating film was then irradiated twice with ultraviolet rays. The first ultraviolet irradiation was performed over the entire surface of the coating film. The second ultraviolet irradiation-was performed using a photomask having a line width of 4 µm and a space width of 4 µm. The first and second ultraviolet irradiances and irradiation times were determined such that the ratio of the hardness of a second portion (high hardness portion) to the hardness of a first portion (low hardness portion) was approximately 10 and that the hardness of the first portion (low hardness portion) was approximately 0.15 GPa. The coating film was then dried at 90°C for 2 minutes. The dried surface layer (film) had a thickness of 5 µm.

In a 1 mm x 1 mm square region disposed on an arbitrary position of the surface of the surface layer (film), a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 8.6, and the hardness of the first portion (low hardness portion) was 0.14 GPa. Both the first portion (low hardness portion) and the second portion (high hardness portion) passed through the film.

### Example 1-4

A coating liquid for a charge-transport layer having the following composition was applied to a 100 mm x 100 mm x 0.75 mm aluminum sheet by Mayer bar coating and was dried to form the charge-transport layer having a thickness of 20 µm.
- Coating liquid for the charge-transport layer
   Bisphenol Z polycarbonate: 10 parts by mass Compound having the structural formula (101)
   (charge-transport substance): 9 parts by mass
   Chlorobenzene: 100 parts by mass

A coating liquid for a surface layer having the following composition was applied to the charge-transport layer by spray coating to form a coating film having a thickness of 5 µm.
- Coating liquid for the surface layer
   Compound having the structural formula (28) (radical polymerizable compound having a charge-transport structure): 10 parts by mass
   Methyl ethyl ketone: 100 parts by mass

The coating film was then irradiated twice with an electron beam. The first electron beam irradiation was performed over the entire surface of the coating film. The second electron beam irradiation was performed using a metal mask having a line width of 4 µm and a space width of 4 µm. The electron beam irradiation was performed at an accelerating voltage of 30 kV under nitrogen purge. The first and second electron beam doses and irradiation times were determined such that the ratio of the hardness of a second portion (high hardness portion) to the hardness of a first portion (low hardness portion) was approximately 30 and that the hardness of the first portion (low hardness portion) was approximately 0.15 GPa. The coating film was then dried at 90°C for 2 minutes. The dried surface layer (film) had a thickness of 5 µm.

In a 1 mm x 1 mm square region disposed on an arbitrary position of the surface of the surface layer (film), a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 27.3, and the hardness of the first portion (low hardness portion) was 0.15 GPa. Both the first portion (low hardness portion) and the second portion (high hardness portion) passed through the film.

### Example 1-5

A film was prepared in the same manner as in Example 1-1 except that the ultraviolet irradiances and irradiation times were determined such that the ratio of the hardness of the second portion (high hardness portion) to the hardness of the first portion (low hardness portion) was approximately 1.5 and that the hardness of the first portion (low hardness portion) was approximately 0.05 GPa. The dried film had a thickness of 15 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.5, and the hardness of the first portion (low hardness portion) was 0.05 GPa. Both the first portion (low hardness portion) and the second portion (high hardness portion) passed through the film.

### Example 1-6

A film was prepared in the same manner as in Example 1-1 except that the ultraviolet irradiances and irradiation times were determined such that the ratio of the hardness of the second portion (high hardness portion) to the hardness of the first portion (low hardness portion) was approximately 1.7 and that the hardness of the first portion (low hardness portion) was approximately 0.50 GPa. The dried film had a thickness of 16 µm.

In a 1 mm x 1 mm square region disposed on an arbitrary position of the surface of the film, a second surface region formed of the second portion (high hardness portion) accounted for 49% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, and the hardness of the first portion (low hardness portion) was 0.51 GPa. Both the first portion (low hardness portion) and the second portion (high hardness portion) passed through the film.

### Example 1-7

A film was prepared in the same manner as in Example 1-1 except that a photomask having a line width of 20 µm and a space width of 20 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.13 GPa. Both the first portion (low hardness portion) and the second portion (high hardness portion) passed through the film.

### Example 1-8

A film was prepared in the same manner as in Example 1-1 except that a photomask having a line width of 4 µm and a space width of 22.7 µm was used in the second ultraviolet irradiation. The dried film had a thickness of 16 µm.

In a 1 mm x 1 mm square region disposed on an arbitrary position of the surface of the film, a second surface region formed of the second portion (high hardness portion) accounted for 16% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, and the hardness of the first portion (low hardness portion) was 0.14 GPa. Both the first portion (low hardness portion) and the second portion (high hardness portion) passed through the film.

### Example 1-9

A film was prepared in the same manner as in Example 1-1 except that a photomask having a line width of 4 µm and a space width of 1.3 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 77% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, and the hardness of the first portion (low hardness portion) was 0.14 GPa. Both the first portion (low hardness portion) and the second portion (high hardness portion) passed through the film.

### Example 1-10

A film was prepared in the same manner as in Example 1-3 except that the amount of photopolymerization initiator in the coating liquid for the surface layer was 3 parts by mass and that the ultraviolet irradiances and irradiation times were determined such that the ratio of the hardness of the second portion (high hardness portion) to the hardness of the first portion (low hardness portion) was approximately 1.5, the hardness of the first portion (low hardness portion) was approximately 0.15 GPa, and the length of the second portion (high hardness portion) extending in the thickness direction of the film was approximately 4 µm. The dried film had a thickness of 5 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. The first portion (low hardness portion) passed through the film, and the second portion (high hardness portion) extended to a depth of 75% of the thickness of the film.

### Comparative Example 1-1

A film was prepared in the same manner as in Example 1-1 except that the ultraviolet irradiances and irradiation times were determined such that the hardness of the surface of the film after the first ultraviolet irradiation was approximately 0.22 GPa, and the second ultraviolet irradiation was not performed. The dried film had a thickness of 17 µm.

The first portion and the second portion had the same hardness in the resulting film. The surface of the film had hardness of 0.22 GPa.

### Comparative Example 1-2

A film was prepared in the same manner as in Example 1-1 except that the ultraviolet irradiances and irradiation times were determined such that the hardness of the surface of the film after the first ultraviolet irradiation was approximately 0.15 GPa, and the second ultraviolet irradiation was not performed. The dried film had a thickness of 17 µm.

The first portion and the second portion had the same hardness in the resulting film. The surface of the film had hardness of 0.15 GPa.

### Comparative Example 1-3

A polycarbonate substrate that has a diameter of 81 mm and a thickness of 1 mm and has a circular opening having a diameter of 51 mm at the center of the substrate was heated to 100°C with a 85 mm x 85 mm x 0.8 mm nickel stamper mold that has a pattern having a line width of 4 µm, a space width of 4 µm, and a height difference between the line and the space of 2 µm, which was heated to 190°C. The pattern of the stamper mold was transferred to the polycarbonate substrate at a load of 6500 N for 5 minutes.

The first portion and the second portion had the same hardness in the resulting film. The surface of the film had hardness of 0.18 GPa.

### Comparative Example 1-4

A film was prepared in the same manner as in Example 1-1 except that a photomask having a line width of 500 µm and a space width of 2000 µm (2 mm) was used in the second ultraviolet irradiation. The dried film had a thickness of 19 µm.

In some 1 mm x 1 mm square regions on the surface of the film, a second surface region formed of the second portion (high hardness portion) accounted for 100% by area of the square region. The ratio of the hardness of the second portion (high hardness portion) to the hardness of the first portion (low hardness portion) was 1.5, and the hardness of the first portion (low hardness portion) was 0.19 GPa. Both the first portion (low hardness portion) and the second portion (high hardness portion) passed through the film.

### Comparative Example 1-5

A film was prepared in the same manner as in Example 1-1 except that the ultraviolet irradiances and irradiation times were determined such that the ratio of the hardness of the second portion (high hardness portion) to the hardness of the first portion (low hardness portion) was approximately 1.1 and that the hardness of the first portion (low hardness portion) was approximately 0.15 GPa. The dried film had a thickness of 16 µm.

In a 1 mm x 1 mm square region disposed on an arbitrary position of the surface of the film, a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.1, and the hardness of the first portion (low hardness portion) was 0.15 GPa. Both the first portion (low hardness portion) and the second portion (high hardness portion) passed through the film.

### Comparative Example 1-6

A film was prepared in the same manner as in Example 1-1 except that the ultraviolet irradiances and irradiation times were determined such that the ratio of the hardness of the second portion (high hardness portion) to the hardness of the first portion (low hardness portion) was approximately 35 and that the hardness of the first portion (low hardness portion) was approximately 0.15 GPa. The dried film had a thickness of 15 µm.

In a 1 mm x 1 mm square region disposed on an arbitrary position of the surface of the film, a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 34.5, and the hardness of the first portion (low hardness portion) was 0.15 GPa. Both the first portion (low hardness portion) and the second portion (high hardness portion) passed through the film.

### Comparative Example 1-7

A film was prepared in the same manner as in Example 1-1 except that a photomask having a line width of 4 µm and a space width of 76 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 6% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.15 GPa. Both the first portion (low hardness portion) and the second portion (high hardness portion) passed through the film.

### Comparative Example 1-8

A film was prepared in the same manner as in Example 1-1 except that a photomask having a line width of 4 µm and a space width of 0.7 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 85% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.15 GPa. Both the first portion (low hardness portion) and the second portion (high hardness portion) passed through the film.

### Comparative Example 1-9

A film was prepared in the same manner as in Example 1-3 except that the amount of photopolymerization initiator in the coating liquid for the surface layer was 5 parts by mass and that the ultraviolet irradiances and irradiation times were determined such that the ratio of the hardness of the second portion (high hardness portion) to the hardness of the first portion (low hardness portion) was approximately 1.5, the hardness of the first portion (low hardness portion) was approximately 0.15 GPa, and the length of the second portion (high hardness portion) extending in the thickness direction of the film was approximately 0.2 µm. The dried film had a thickness of 5 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, and the hardness of the first portion (low hardness portion) was 0.14 GPa. The first portion (low hardness portion) passed through the film, and the second portion (high hardness portion) extended to a depth of 4% of the thickness of the film.

### Comparative Example 1-10

The following solution 1 and solution 2 were separately charged in two solution tanks of an ink jet applicator (trade name: PixelJet 128, manufactured by Trident). This ink jet applicator has two liquid ejection units, each of which has a plurality of nozzles.

### - Solution 1-

The solution 1 contained the following components.
Fluorocarbon siloxane rubber composition (trade name: Sifel 610, manufactured by Shin-Etsu Chemical Co., Ltd.): 75% by mass
Fluorinated solvent (trade name: X-70-580, manufactured by Shin-Etsu Chemical Co., Ltd.): 25% by mass

### - Solution 2-

The solution 2 contained the following components.
Fluorocarbon siloxane rubber composition (trade name: Sifel 650, manufactured by Shin-Etsu Chemical Co., Ltd.): 75% by mass
Fluorinated solvent (trade name: X-70-580, manufactured by Shin-Etsu Chemical Co., Ltd.): 25% by mass

Twenty nozzles of each of the two liquid ejection units were used. A square polyimide sheet (100 mm x 100 mm x 1 mm) was placed 10 mm apart from the nozzle ejection surface. The solution 1 and the solution 2 of the two liquid ejection units were ejected onto the polyimide sheet from one side to the opposite side of the polyimide sheet at a driving frequency of 2.6 kHz and a liquid ejection unit traveling speed of 450 mm/min such that each of the solution 1 and the solution 2 formed a line having a width of 4 µm on the polyimide sheet, the line of the solution 1 was contiguous to the line of the solution 2, and the line of the solution 1 and the line of the solution 2 were parallel to a side of the polyimide sheet. This process was repeatedly performed to form lines of the solution 1 and lines of the solution 2 each having a width of 4 µm disposed contiguous to and parallel to each other, forming a coating film on the polyimide sheet as illustrated in Fig. 1 as viewed from the top. The coating film was heated at 120°C for 30 minutes and then at 200°C for 120 minutes. The coating film on the polyimide sheet thus heated had a thickness of 20 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 2.8, and the hardness of the first portion (low hardness portion) was 0.00038 GPa. Both the first portion (low hardness portion) and the second portion (high hardness portion) passed through the film.

Table 1 summarizes Examples 1-1 to 1-10 and Comparative Examples 1-1 to 1-10.

**[Table 1]**

| | Raw materials for film (raw materials for surface layer) | | Photomask | | Formed film (formed surface layer) | | | | |
|---|---|---|---|---|---|---|---|---|---|
| | | Photopolymerization initiator [parts by mass] | Line width [µm] | Space width [µm] | Film thickness [µm] | Second surface region [%] | Hardness ratio | Hardness of first portion [GPa] | Depth of second portion relative to film thickness [%] |
| Example 1-1 | Negative photoresist material | - | 4 | 4 | 17 | 51 | 1.6 | 0.14 | 100 |
| Example 1-2 | Negative photoresist material | - | 4 | 4 | 16 | 53 | 1.2 | 0.16 | 100 |
| Example 1-3 | Coating solution for surface layer | 1 | 4 | 4 | 15 | 51 | 8.6 | 0.14 | 100 |
| Example 1-4 | Negative photoresist material | - | 4 | 4 | 15 | 50 | 27.3 | 0.15 | 100 |
| Example 1-5 | Negative photoresist material | - | 4 | 4 | 15 | 50 | 1.5 | 0.05 | 100 |
| Example 1-6 | Negative photoresist material | - | 4 | 4 | 16 | 49 | 1.7 | 0.51 | 100 |
| Example 1-7 | Negative photoresist material | - | 20 | 20 | 17 | 51 | 1.6 | 0.13 | 100 |
| Example 1-8 | Negative photoresist material | - | 4 | 22.7 | 16 | 16 | 1.7 | 0.14 | 100 |
| Example 1-9 | Negative photoresist material | - | 4 | 1.3 | 17 | 77 | 1.7 | 0.14 | 100 |
| Example 1-10 | Coating solution for surface layer | 3 | 4 | 4 | 16 | 50 | 1.6 | 0.14 | 75 |
| Comparative Example 1-1 | Negative photoresist material | - | - | - | 17 | - | - | (0.22) | - |
| Comparative Example 1-2 | Negative photoresist material | - | - | - | 17 | - | - | (0.15) | - |
| Comparative Example 1-3 | Negative photoresist material | - | (4) | (4) | 18 | - | - | (0.18) | - |
| Comparative Example 1-4 | Negative photoresist material | - | 500 | 2000 | 19 | (100) | 1.5 | 0.19 | 100 |
| Comparative Example 1-5 | Negative photoresist material | - | 4 | 4 | 16 | 51 | 1.1 | 0.15 | 100 |
| Comparative Example 1-6 | Negative photoresist material | - | 4 | 4 | 15 | 51 | 34.5 | 0.15 | 100 |
| Comparative Example 1-7 | Negative photoresist material | - | 4 | 76 | 17 | 6 | 1.6 | 0.15 | 100 |
| Comparative Example 1-8 | Negative photoresist material | - | 4 | 0.7 | 17 | 85 | 1.6 | 0.15 | 100 |
| Comparative Example 1-9 | Coating solution for surface layer | 5 | 4 | 4 | 16 | 50 | 1.7 | 0.14 | 4 |
| Comparative Example 1-10 | Fluoroelastomer liquid | - | (4) | (4) | 20 | 50 | 2.8 | 0.00038 | 100 |

| | | | | | | | | | |
|---|---|---|---|---|---|---|---|---|---|
| Second surface region [%]: Second surface region [%] in a 1 mm x 1 mm square region disposed on an arbitrary position of the surface of a film. Hardness ratio: Ratio (H₂/H₁) of the hardness (H₂ [GPa]) of the second portion to the hardness (H₁ [GPa]) of the first portion. Depth of second portion relative to film thickness: The ratio of the depth of the second portion to the thickness of the film. | | | | | | | | | |

### Example 2-1

A photosensitive silicone polymer serving as a negative photoresist material manufactured by Shin-Etsu Chemical Co., Ltd. (trade name: SINR-3170PX) was applied to a silicon wafer by spinner coating to form a coating film. The coating film was then irradiated twice with ultraviolet rays. The first ultraviolet irradiation was performed over the entire surface of the coating film. The second ultraviolet irradiation was performed using a honeycomb photomask in which each of the regular hexagons had a side length of 10 µm and a wall thickness of 2 µm. The first and second ultraviolet irradiances and irradiation times were determined such that the ratio of the hardness of a second portion (high hardness portion) to the hardness of a first portion (low hardness portion) was approximately 1.6 and that the hardness of the second portion (high hardness portion) was approximately 0.22 GPa. The coating film was then dried at 90°C for 2 minutes. The dried film had a thickness of 17 µm.

In a 1 mm x 1 mm square region disposed on an arbitrary position of the surface of the film, a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, the hardness of the first portion (low hardness portion) was 0.14 GPa, and the hardness of the second portion (high hardness portion) was 0.22 GPa. Both the first portion (low hardness portion) and the second portion (high hardness portion) passed through the film.

### Example 2-2

A film was prepared in the same manner as in Example 2-1 except that a honeycomb photomask in which each of the regular hexagons had a side length of 10 µm and a wall thickness of 1 µm was used in the second ultraviolet irradiation. The dried film had a thickness of 18 µm.

In a 1 mm x 1 mm square region disposed on an arbitrary position of the surface of the film, a second surface region formed of the second portion (high hardness portion) accounted for 12% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, the hardness of the first portion (low hardness portion) was 0.14 (0.135) GPa, and the hardness of the second portion (high hardness portion) was 0.23 GPa. Both the first portion (low hardness portion) and the second portion (high hardness portion) passed through the film.

### Example 2-3

A film was prepared in the same manner as in Example 2-1 except that a honeycomb photomask in which each of the regular hexagons had a side length of 10 µm and a wall thickness of 6 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 69% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, the hardness of the first portion (low hardness portion) was 0.14 GPa, and the hardness of the second portion (high hardness portion) was 0.23 GPa. Both the first portion (low hardness portion) and the second portion (high hardness portion) passed through the film.

### Example 2-4

A film was prepared in the same manner as in Example 2-1 except that the first and second ultraviolet irradiances and irradiation times were determined such that the ratio of the hardness of the second portion (high hardness portion) to the hardness of the first portion (low hardness portion) was approximately 1.2 and that the hardness of the second portion (high hardness portion) was approximately 0.19 GPa. The dried film had a thickness of 16 µm.

In a 1 mm x 1 mm square region disposed on an arbitrary position of the surface of the film, a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.2, the hardness of the first portion (low hardness portion) was 0.15 GPa, and the hardness of the second portion (high hardness portion) was 0.18 GPa. Both the first portion (low hardness portion) and the second portion (high hardness portion) passed through the film.

### Example 2-5

A coating liquid for a charge-transport layer having the following composition was applied to a 100 mm x 100 mm x 0.75 mm aluminum sheet by Mayer bar coating and was dried to form the charge-transport layer having a thickness of 20 µm.
Bisphenol Z polycarbonate: 10 parts by mass
Compound having the structural formula (101) (charge-transport substance): 9 parts by mass
Chlorobenzene: 100 parts by mass

A coating liquid for a surface layer having the following composition was applied to the charge-transport layer by spray coating to form a coating film having a thickness of 5 µm.
- Coating liquid for the surface layer
   Compound having the structural formula (14) (radical polymerizable compound having a charge-transport structure): 10 parts by mass
   Trimethylolpropane triacrylate: 10 parts by mass
   Photopolymerization initiator: 1 part by mass
   Chlorobenzene: 100 parts by mass

The coating film was then irradiated twice with ultraviolet rays. The first ultraviolet irradiation was performed over the entire surface of the coating film. The second ultraviolet irradiation was performed using a honeycomb photomask in which each of the regular hexagons had a side length of 10 µm and a wall thickness of 2 µm. The first and second ultraviolet irradiances and irradiation times were determined such that the ratio of the hardness of a second portion (high hardness portion) to the hardness of a first portion (low hardness portion) was approximately 30 and that the hardness of the second portion (high hardness portion) was approximately 0.30 GPa. The coating film was then dried at 90°C for 2 minutes. The dried surface layer (film) had a thickness of 5 µm.

In a 1 mm x 1 mm square region disposed on an arbitrary position of the surface of the surface layer (film), a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 26.8, the hardness of the first portion (low hardness portion) was 0.01 (0.01044) GPa, and the hardness of the second portion (high hardness portion) was 0.28 GPa. Both the first portion (low hardness portion) and the second portion (high hardness portion) passed through the film.

### Example 2-6

A film was prepared in the same manner as in Example 2-1 except that the first and second ultraviolet irradiances and irradiation times were determined such that the ratio of the hardness of the second portion (high hardness portion) to the hardness of the first portion (low hardness portion) was approximately 1.4 and that the hardness of the second portion (high hardness portion) was approximately 0.02 GPa. The dried film had a thickness of 17 µm.

In a 1 mm x 1 mm square region disposed on an arbitrary position of the surface of the film, a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.4, the hardness of the first portion (low hardness portion) was 0.01 (0.014) GPa, and the hardness of the second portion (high hardness portion) was 0.02 GPa. Both the first portion (low hardness portion) and the second portion (high hardness portion) passed through the film.

### Example 2-7

A coating liquid for a charge-transport layer having the following composition was applied to a 100 mm x 100 mm x 0.75 mm aluminum sheet by Mayer bar coating and was dried to form the charge-transport layer having a thickness of 20 µm.
Bisphenol Z polycarbonate: 10 parts by mass
Compound having the structural formula (101) (charge-transport substance): 10 parts by mass
Chlorobenzene: 100 parts by mass

A coating liquid for a surface layer having the following composition was applied to the charge-transport layer by spray coating to form a coating film having a thickness of 5 µm.

Radical polymerizable compound having a charge-transport structure (exemplary compound No. 9 (Compound having the structural formula (9))): 10 parts by mass
Methyl ethyl ketone: 100 parts by mass

The coating film was then irradiated twice with an electron beam. The first electron beam irradiation was performed over the entire surface of the coating film. The second electron beam irradiation was performed using a honeycomb electron beam mask in which each of the regular hexagons had a side length of 10 µm and a wall thickness of 2 µm. The electron beam irradiation was performed at an accelerating voltage of 30 kV under nitrogen purge. The first and second electron beam doses and irradiation times were determined such that the ratio of the hardness of a second portion (high hardness portion) to the hardness of a first portion (low hardness portion) was approximately 1.6 and that the hardness of the second portion (high hardness portion) was approximately 5.00 GPa. The coating film was then dried at 90°C for 2 minutes. The dried surface layer (film) had a thickness of 5 µm.

In a 1 mm x 1 mm square region disposed on an arbitrary position of the surface of the surface layer (film), a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.8, the hardness of the first portion (low hardness portion) was 2.69 GPa, and the hardness of the second portion (high hardness portion) was 4.84 GPa.

### Example 2-8

A film was prepared in the same manner as in Example 2-1 except that a photomask having a hole form in which each of the holes had a diameter of 0.2 µm and a center-to-center distance of 0.4 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 21% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, the hardness of the first portion (low hardness portion) was 0.13 GPa, and the hardness of the second portion (high hardness portion) was 0.22 GPa. Both the first portion (low hardness portion) and the second portion (high hardness portion) passed through the film.

### Example 2-9

A film was prepared in the same manner as in Example 2-1 except that a honeycomb photomask in which each of the regular hexagons had a side length of 50 µm and a wall thickness of 10 µm was used in the second ultraviolet irradiation. The dried film had a thickness of 18 µm.

In a 1 mm x 1 mm square region disposed on an arbitrary position of the surface of the film, a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, the hardness of the first portion (low hardness portion) was 0.14 GPa, and the hardness of the second portion (high hardness portion) was 0.23 GPa. Both the first portion (low hardness portion) and the second portion (high hardness portion) passed through the film.

### Comparative Example 2-1

A film was prepared in the same manner as in Example 2-1 except that the first ultraviolet irradiation over the entire surface of the coating film was not performed and that, after ultraviolet irradiation was performed using a honeycomb photomask in which each of the regular hexagons had a side length of 10 µm and a wall thickness of 2 µm, a non-irradiated area was etched. The dried film had a thickness of 17 µm.

The first portion and the second portion had the same hardness in the resulting film. The surface of the film had hardness of 0.24 GPa. The film had asperities having a height of 17 µm.

### Comparative Example 2-2

A film was prepared in the same manner as in Example 2-1 except that a honeycomb photomask in which each of the regular hexagons had a side length of 10 µm and a wall thickness of 0.5 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 6% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, the hardness of the first portion (low hardness portion) was 0.14 GPa, and the hardness of the second portion (high hardness portion) was 0.23 GPa. Both the first portion (low hardness portion) and the second portion (high hardness portion) passed through the film.

### Comparative Example 2-3

A film was prepared in the same manner as in Example 2-1 except that a honeycomb photomask in which each of the regular hexagons had a side length of 10 µm and a wall thickness of 8 µm was used in the second ultraviolet irradiation. The dried film had a thickness of 17 µm.

In a 1 mm x 1 mm square region disposed on an arbitrary position of the surface of the film, a second surface region formed of the second portion (high hardness portion) accounted for 92% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.5, the hardness of the first portion (low hardness portion) was 0.15 GPa, and the hardness of the second portion (high hardness portion) was 0.22 GPa. Both the first portion (low hardness portion) and the second portion (high hardness portion) passed through the film.

### Comparative Example 2-4

A film was prepared in the same manner as in Example 2-1 except that the first and second ultraviolet irradiances and irradiation times were determined such that the ratio of the hardness of the second portion (high hardness portion) to the hardness of the first portion (low hardness portion) was approximately 40.0 and that the hardness of the second portion (high hardness portion) was approximately 5.00 GPa. The dried film had a thickness of 16 µm.

In a 1 mm x 1 mm square region disposed on an arbitrary position of the surface of the film, a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 37.3, the hardness of the first portion (low hardness portion) was 0.13 GPa, and the hardness of the second portion (high hardness portion) was 4.85 GPa. Both the first portion (low hardness portion) and the second portion (high hardness portion) passed through the film.

### Comparative Example 2-5

A film was prepared in the same manner as in Example 2-5 except that the amount of photopolymerization initiator in the coating liquid for the surface layer was 5 parts by mass and that the first and second ultraviolet irradiances and irradiation times were determined such that the ratio of the hardness of the second portion (high hardness portion) to the hardness of the first portion (low hardness portion) was approximately 1.6, the hardness of the second portion (high hardness portion) was approximately 0.22 GPa, and the length of the second portion (high hardness portion) extending in the thickness direction of the film was approximately 1 µm. The dried film had a thickness of 5 µm.

In a 1 mm x 1 mm square region disposed on an arbitrary position of the surface of the film, a second surface region formed of the second portion (high hardness portion) accounted for 23% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.5, the hardness of the first portion (low hardness portion) was 0.13 GPa, and the hardness of the second portion (high hardness portion) was 0.20 GPa. The first portion (low hardness portion) passed through the film, and the second portion (high hardness portion) extended to a depth of 20% of the thickness of the film.

### Example 3-1

Polytetrafluoroethylene (PTFE) particles having an average particle size of 0.5 µm serving as a lubricant manufactured by Daikin Industries, Ltd. (trade name: Lubron L-2) and a surfactant manufactured by Toagosei Co., Ltd. (trade name: GF-300) were added to a photosensitive silicone polymer serving as a negative photoresist material manufactured by Shin-Etsu Chemical Co., Ltd. (trade name: SINR-3170PX) to prepare a liquid mixture. The amount of polytetrafluoroethylene particles (dispersion concentration) was 10% by volume of the liquid mixture. The liquid mixture was applied to a silicon wafer by spinner coating and was dried at 90°C for 2 minutes (pre-drying).

The coating film was then irradiated twice with ultraviolet rays. The first ultraviolet irradiation was performed over the entire surface of the coating film. The second ultraviolet irradiation was performed using a photomask having a line width of 4.0 µm and a space width of 4.0 µm. The first and second ultraviolet irradiances and irradiation times were determined such that the ratio of the hardness of a second portion (high hardness portion) to the hardness of a first portion (low hardness portion) was approximately 1.6 and that the hardness of the first portion (low hardness portion) was approximately 0.14 GPa. The coating film was then dried at 90°C for 2 minutes (post-drying). The dried film had a thickness of 17 µm.

In a 1 mm x 1 mm square region disposed on an arbitrary position of the surface of the film, a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-2

A film was prepared in the same manner as in Example 3-1 except that polytetrafluoroethylene particles having an average particle size of 1.0 µm was used as a lubricant. The dried film had a thickness of 16 µm.

In a 1 mm x 1 mm square region disposed on an arbitrary position of the surface of the film, a second surface region formed of the second portion (high hardness portion) accounted for 53% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.15 GPa. Both the first portion (low hardness portion) and the second portion (high hardness portion) passed through the film.

### Example 3-3

A film was prepared in the same manner as in Example 3-1 except that polytetrafluoroethylene particles having an average particle size of 4.0 µm was used as a lubricant. The dried film had a thickness of 17 µm.

In a 1 mm x 1 mm square region disposed on an arbitrary position of the surface of the film, a second surface region formed of the second portion (high hardness portion) accounted for 40% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-4

A film was prepared in the same manner as in Example 3-1 except that polytetrafluoroethylene particles having an average particle size of 10 µm was used as a lubricant. The dried film had a thickness of 17 µm.

In a 1 mm x 1 mm square region disposed on an arbitrary position of the surface of the film, a second surface region formed of the second portion (high hardness portion) accounted for 20% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-5

A film was prepared in the same manner as in Example 3-1 except that the dispersion concentration of the polytetrafluoroethylene particles was 1% by volume. The dried film had a thickness of 17 µm.

In a 1 mm x 1 mm square region disposed on an arbitrary position of the surface of the film, a second surface region formed of the second portion (high hardness portion) accounted for 55% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-6

A film was prepared in the same manner as in Example 3-1 except that the dispersion concentration of the polytetrafluoroethylene particles was 5% by volume. The dried film had a thickness of 17 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-7

A film was prepared in the same manner as in Example 3-1 except that the dispersion concentration of the polytetrafluoroethylene particles was 20% by volume. The dried film had a thickness of 17 µm.

In a 1 mm x 1 mm square region disposed on an arbitrary position of the surface of the film, a second surface region formed of the second portion (high hardness portion) accounted for 30% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-8

A film was prepared in the same manner as in Example 3-2 except that a photomask having a hole form in which each of the holes had a diameter of 4.0 µm was used. The dried film had a thickness of 17 µm.

In a 1 mm x 1 mm square region disposed on an arbitrary position of the surface of the film, a second surface region formed of the second portion (high hardness portion) accounted for 52% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.13 GPa. Both the first portion (low hardness portion) and the second portion (high hardness portion) passed through the film.

### Example 3-9

A film was prepared in the same manner as in Example 3-2 except that a photomask having a honeycomb form in which the maximum distance between opposite apexes was 4.0 µm was used. The dried film had a thickness of 16 µm.

In a 1 mm x 1 mm square region disposed on an arbitrary position of the surface of the film, a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-10

A film was prepared in the same manner as in Example 3-1 except that mica particles having an average particle size of 0.5 µm manufactured by Co-op Chemical Co., Ltd. (trade name: MK-100) was used as a lubricant. The dried film had a thickness of 16 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, and the hardness of the first portion (low hardness portion) was 0.14 GPa. Both the first portion (low hardness portion) and the second portion (high hardness portion) passed through the film.

### Example 3-11

A film was prepared in the same manner as in Example 3-1 except that boron nitride (BN) particles having an average particle size of 0.5 µm manufactured by Maruka Corp. (trade name: AP-20S) was used as a lubricant. The dried film had a thickness of 17 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.7, and the hardness of the first portion (low hardness portion) was 0.14 GPa. Both the first portion (low hardness portion) and the second portion (high hardness portion) passed through the film.

### Example 3-12

A film was prepared in the same manner as in Example 3-1 except that melamine cyanurate (MCN) particles having an average particle size of 0.5 µm manufactured by Sakai Chemical Industry Co., Ltd. (trade name: MC-5F) was used as a lubricant. The dried film had a thickness of 17 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-13

A film was prepared in the same manner as in Example 3-1 except that silica particles having an average particle size of 0.5 µm manufactured by Ube-Nitto Kasei Co., Ltd. (trade name: Hipresica) was used as a lubricant. The dried film had a thickness of 17 µm.

In a 1 mm x 1 mm square region disposed on an arbitrary position of the surface of the film, a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-14

A coating liquid for a charge-transport layer having the following composition was applied to a 100 mm x 100 mm x 0.75 mm aluminum sheet by Mayer bar coating and was dried to form the charge-transport layer having a thickness of 20 µm.
- Coating liquid for the charge-transport layer
   Bisphenol Z polycarbonate: 10 parts by mass
   Compound having the structural formula (101) (charge-transport substance): 9 parts by mass
   Chlorobenzene: 100 parts by mass

A coating liquid for a surface layer having the following composition was applied to the charge-transport layer by spray coating to form a coating film having a thickness of 5 µm.
- Coating liquid for a surface layer
   Compound having the structural formula (28) (radical polymerizable compound having a charge-transport structure): 10 parts by mass
   Trimethylolpropane triacrylate: 10 parts by mass
   Polytetrafluoroethylene particles (average particle size 1.0 µm): 1 part by mass (corresponding to 10% by volume)
   Surfactant manufactured by Toagosei Co., Ltd. (trade name: GF-300): 0.05 parts by mass
   2,2-dimethoxy-1,2-diphenylethane-1-one (photopolymerization initiator, trade name: IRGACURE 651, manufactured by BASF): 1 part by mass
   Chlorobenzene: 100 parts by mass

The coating film was then irradiated twice with ultraviolet rays. The first ultraviolet irradiation was performed over the entire surface of the coating film. The second ultraviolet irradiation was performed using a photomask having a line width of 4.0 µm and a space width of 4.0 µm. The first and second ultraviolet irradiances and irradiation times were determined such that the ratio of the hardness of a second portion (high hardness portion) to the hardness of a first portion (low hardness portion) was approximately 1.5 and that the hardness of the first portion (low hardness portion) was approximately 0.15 GPa. The coating film was then dried at 90°C for 2 minutes. The dried surface layer (film) had a thickness of 5 µm.

In a 1 mm x 1 mm square region disposed on an arbitrary position of the surface of the surface layer (film), a second surface region formed of the second portion (high hardness portion) accounted for 51% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.14 GPa. Both the first portion (low hardness portion) and the second portion (high hardness portion) passed through the film.

### Example 3-15

A coating liquid for a charge-transport layer having the following composition was applied to a 100 mm x 100 mm x 0.75 mm aluminum sheet by Mayer bar coating and was dried to form the charge-transport layer having a thickness of 20 µm.
Bisphenol Z polycarbonate: 10 parts by mass
Compound having the structural formula (101) (charge-transport substance): 10 parts by mass
Chlorobenzene: 100 parts by mass

A coating liquid for a surface layer having the following composition was applied to the charge-transport layer by spray coating to form a coating film having a thickness of 5 µm.
- Coating liquid for the surface layer
   Compound having the structural formula (28) (radical polymerizable compound having a charge-transport structure): 10 parts by mass
   Polytetrafluoroethylene particles (average particle size 1.0 µm): 1 part by mass (corresponding to 10% by volume)
   Surfactant manufactured by Toagosei Co., Ltd. (trade name: GF-300): 0.05 parts by mass
   Methyl ethyl ketone: 100 parts by mass

The coating film was then irradiated twice with an electron beam. The first electron beam irradiation was performed over the entire surface of the coating film. The second electron beam irradiation was performed using an electron beam mask (metal mask) having a line width of 4.0 µm and a space width of 4.0 µm. The electron beam irradiation was performed at an accelerating voltage of 30 kV under nitrogen purge. The first and second electron beam doses were determined such that the ratio of the hardness of a second portion (high hardness portion) to the hardness of a first portion (low hardness portion) was approximately 1.6 and that the hardness of the first portion (low hardness portion) was approximately 0.15 GPa. The coating film was then dried at 90°C for 2 minutes. The dried surface layer (film) had a thickness of 5 µm.

In a 1 mm x 1 mm square region disposed on an arbitrary position of the surface of the surface layer (film), a second surface region formed of the second portion (high hardness portion) accounted for 50% by area of the square region, and a first surface region formed of the first portion (low hardness portion) and the second surface region accounted for 100% by area of the square region. The ratio of the hardness of the second portion (high hardness portion) to the hardness of the first portion (low hardness portion) was 1.6, and the hardness of the first portion (low hardness portion) was 0.15 GPa. Both the first portion (low hardness portion) and the second portion (high hardness portion) passed through the film.

### Comparative Example 3-1

Polytetrafluoroethylene particles having an average particle size of 0.5 µm serving as a lubricant manufactured by Daikin Industries, Ltd. (trade name: Lubron L-2) and a surfactant manufactured by Toagosei Co., Ltd. (trade name: GF-300) were added to a photosensitive polyimide silicone serving as a negative photoresist material manufactured by Shin-Etsu Chemical Co., Ltd. (trade name: SPS-7750) to prepare a liquid mixture. The amount of polytetrafluoroethylene particles (dispersion concentration) was 10% by volume of the liquid mixture. The liquid mixture was applied to a silicon wafer by spinner coating and was dried at 90°C for 2 minutes (pre-drying). The dried film had a thickness of 17 µm.

The first portion and the second portion had the same hardness in the resulting film. The surface of the film had hardness of 0.14 GPa.

### Comparative Example 3-2

A film was prepared in the same manner as in Comparative Example 3-1 except that mica particles having an average particle size of 0.50 µm manufactured by Co-op Chemical Co., Ltd. (trade name: MK-100) was used as a lubricant. The dried film had a thickness of 17 µm.

The first portion and the second portion had the same hardness in the resulting film. The surface of the film had hardness of 0.14 GPa.

Table 2 summarizes Examples 3-1 to 3-15 and Comparative Examples 3-1 and 3-2.

**[Table 2]**

| | Raw materials for film (raw materials for surface layer) | | | | Photomask | Formed film (formed surface layer) | | | | |
|---|---|---|---|---|---|---|---|---|---|---|
| | | Lubricant | | | | Film thickness [µm] | Second surface region [%] | Hardness ratio | Hardness of first portion [GPa] | Depth of second portion relative to film thickness [%] |
| | | Type | Average size [µm] | Content [vol%] | | | | | | |
| Example 3-1 | Negative photoresist material | PTFE | 0.5 | 10 | L&S | 17 | 51 | 1.6 | 0.14 | 100 |
| Example 3-2 | Negative photoresist material | PTFE | 1.0 | 10 | L&S | 16 | 53 | 1.6 | 0.15 | 100 |
| Example 3-3 | Negative photoresist material | PTFE | 4.0 | 10 | L&S | 17 | 40 | 1.6 | 0.14 | 100 |
| Example 3-4 | Negative photoresist material | PTFE | 10 | 10 | L&S | 17 | 20 | 1.6 | 0.14 | 100 |
| Example 3-5 | Negative photoresist material | PTFE | 0.5 | 1 | L&S | 17 | 55 | 1.6 | 0.14 | 100 |
| Example 3-6 | Negative photoresist material | PTFE | 0.5 | 5 | L&S | 17 | 50 | 1.6 | 0.14 | 100 |
| Example 3-7 | Negative photoresist material | PTFE | 0.5 | 20 | L&S | 17 | 30 | 1.6 | 0.14 | 100 |
| Example 3-8 | Negative photoresist material | PTFE | 1.0 | 10 | Hole | 17 | 52 | 1.6 | 0.13 | 100 |
| Example 3-9 | Negative photoresist material | PTFE | 1.0 | 10 | Honeycomb | 16 | 51 | 1.6 | 0.14 | 100 |
| Example 3-10 | Negative photoresist material | Mica | 0.5 | 10 | L&S | 16 | 50 | 1.7 | 0.14 | 100 |
| Example 3-11 | Negative photoresist material | BN | 0.5 | 10 | L&S | 17 | 50 | 1.7 | 0.14 | 100 |
| Example 3-12 | Negative photoresist material | MCA | 0.5 | 10 | L&S | 17 | 50 | 1.6 | 0.14 | 100 |
| Example 3-13 | Negative photoresist material | Silica | 0.5 | 10 | L&S | 17 | 50 | 1.6 | 0.14 | 100 |
| Example 3-14 | Coating solution for surface layer | PTFE | 1.0 | 10 | L&S | 5 | 51 | 1.6 | 0.14 | 100 |
| Example 3-15 | Coating solution for surface layer | PTFE | 1.0 | 10 | L&S | 5 | 50 | 1.6 | 0.15 | 100 |
| Comparative Example 3-1 | Negative photoresist material | PTFE | 0.5 | 10 | - | 17 | - | - | (0.14) | - |
| Comparative Example 3-2 | Negative photoresist material | Mica | 0.5 | 10 | - | 17 | - | - | (0.14) | - |

| | | | | | | | | | | |
|---|---|---|---|---|---|---|---|---|---|---|
| Second surface region [%]: Second surface region [%] in a 1 mm x 1 mm square region disposed on an arbitrary position of the surface of a film. Hardness ratio: Ratio (H₂/H₁) of the hardness (H₂ [GPa]) of the second portion to the hardness (H₁ [GPa]) of the first portion. Depth of second portion relative to film thickness: The ratio of the depth of the second portion to the thickness of the film. | | | | | | | | | | |

### (4) Evaluation of Friction coefficient (Coefficient of Kinetic Friction)

The friction coefficient of the surface of a film was measured with a torque type friction and wear tester (trade name: Type: 20) manufactured by Shinto Scientific Co., Ltd. A film to be measured was placed on a turntable (diameter 12.7 mm) of the tester. A urethane rubber member (JIS-A hardness: 70) 3 mm in thickness x 1 cm in width x 1 cm in length was made to abut against the circumference of the film at an angle of 24 degrees (0 degrees indicates that the rubber member is parallel to the film) in the driven direction (the same direction as the rotation). The film (radius 33 mm) on the turntable was rotated under a load of 30 gf at a number of revolutions of 47.8 rpm. The friction coefficient (the coefficient of kinetic friction) was determined from the force generated between the film and the urethane rubber member.

For Examples 1-1 to 1-10 and Comparative Examples 1-1 to 1-10, the friction coefficient (the coefficient of kinetic friction) was measured after the film was rotated for 10 or 30 hours while the urethane rubber member abutted against the film. For Examples 2-1 to 2-9, Comparative Examples 2-1 to 2-5, Examples 3-1 to 3-15, and Comparative Examples 3-1 and 3-2, the friction coefficient (the coefficient of kinetic friction) was measured after the film was rotated for 1 or 20 hours while the urethane rubber member abutted against the film.

### (5) Evaluation of Surface Asperities

The surface asperities of a film were measured with a surface profiler (trade name: Tencor P-10) manufactured by KLA-Tencor Corp. The widths of the raised portion formed of the second portion and the depressed portion formed of the first portion and the height difference between the raised portion and the depressed portion were measured.

### (6) Evaluation of Stick and Slip

For Examples 1-1 to 1-10 and Comparative Examples 1-1 to 1-9, stick and slip was evaluated with a torque type friction and wear tester (trade name: Type: 20) manufactured by Shinto Scientific Co., Ltd. After a film was rotated for 30 hours while the urethane rubber member abutted against the film, the urethane rubber member was made to abut against the circumference of the film at an angle of 24 degrees (0 degrees indicates that the rubber member is parallel to the film) in the reverse direction (counter direction). The film (radius 33 mm) on the turntable was then rotated under a load of 30 gf at a number of revolutions of 23.9 rpm (slow rotation) or 47.8 rpm (fast rotation). The stick and slip was evaluated on the basis of the behavior of the urethane rubber member in accordance with the following three criteria.
A: The film rotated without problems at numbers of revolutions of 23.9 and 47.8 rpm.
B: The urethane rubber member continuously bounded at a number of revolutions of 23.9 rpm, but the film rotated without problems at a number of revolutions of 47.8 rpm.
C: The urethane rubber member continuously bounded at numbers of revolutions of 23.9 and 47.8 rpm.

The frequency of stick and slip tends to increase with the friction coefficient.

### (7) Evaluation of Destruction of Raised Portion

For Examples 1-1 to 1-10, Comparative Examples 1-1 to 1-10, Examples 2-1 to 2-9, and Comparative Examples 2-1 to 2-5, the destruction of the raised portion formed of the second portion was evaluated with an ultra-high depth shape measurement microscope (trade name: VK-9510) manufactured by Keyence Corp. and an image processor (trade name: Luzex AP) manufactured by Nireco Corp.

For Examples 1-1 to 1-10 and Comparative Examples 1-1 to 1-10, after the film was rotated for 30 hours while the urethane rubber member abutted against the film, the destruction of the raised portion was evaluated in accordance with the following two criteria.
A: In each 1 mm x 1 mm square, a broken area of the raised portion was less than 20% of the total area of the raised portion.
C: In each 1 mm x 1 mm square, a broken area of the raised portion was 30% or more of the total area of the raised portion.

For Examples 2-1 to 2-9 and Comparative Examples 2-1 to 2-5, after the film was rotated for 20 hours while the urethane rubber member abutted against the film, the destruction of the raised portion was evaluated in accordance with the following three criteria.
A: In each 1 mm x 1 mm square, a broken area of the raised portion was less than 10% of the total area of the raised portion.
B: In each 1 mm x 1 mm square, a broken area of the raised portion was 10% or more and less than 20% of the total area of the raised portion.
C: In each 1 mm x 1 mm square, a broken area of the raised portion was 20% or more of the total area of the raised portion.

### (8) Evaluation Result 1

### Example 1-1

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.25 µm, and the friction coefficient of the surface of the film was 0.44.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.24 µm, and the friction coefficient of the surface of the film was 0.42. Stick and slip was not observed for both the slow rotation and the fast rotation, and the raised portion was not broken. Thus, it was shown that even after the film was rotated for 30 hours while the urethane rubber member abutted against the film, the film retained its surface shape and a low friction coefficient.

### Example 1-2

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.18 µm, and the friction coefficient of the surface of the film was 0.56.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.19 µm, and the friction coefficient of the surface of the film was 0.50. Stick and slip was not observed for both the slow rotation and the fast rotation, and the raised portion was not broken. Thus, it was shown that even after the film was rotated for 30 hours while the urethane rubber member abutted against the film, the film retained its surface shape and a low friction coefficient. However, the friction coefficient was higher than the friction coefficient in Example 1-1.

### Example 1-3

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.30 µm, and the friction coefficient of the surface of the film was 0.49.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.31 µm, and the friction coefficient of the surface of the film was 0.52. Stick and slip was not observed for both the slow rotation and the fast rotation, and the raised portion was not broken. Thus, it was shown that even after the film was rotated for 30 hours while the urethane rubber member abutted against the film, the film retained its surface shape and a low friction coefficient.

### Example 1-4

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.38 µm, and the friction coefficient of the surface of the film was 0.68.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.39 µm, and the friction coefficient of the surface of the film was 0.73. Stick and slip was observed for the slow rotation but was not observed for the fast rotation. The raised portion was not broken. After the film was rotated for 10 hours and 30 hours while the urethane rubber member abutted against the film, the friction coefficient of the surface of the film was higher than the friction coefficient in Example 1-1.

### Example 1-5

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.36 µm, and the friction coefficient of the surface of the film was 0.62.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.36 µm, and the friction coefficient of the surface of the film was 0.68. Stick and slip was observed for the slow rotation but was not observed for the fast rotation. The raised portion was not broken. After the film was rotated for 10 hours and 30 hours while the urethane rubber member abutted against the film, the friction coefficient of the surface of the film was higher than the friction coefficient in Example 1-1.

### Example 1-6

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.27 µm, and the friction coefficient of the surface of the film was 0.61.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.28 µm, and the friction coefficient of the surface of the film was 0.66. Stick and slip was observed for the slow rotation but was not observed for the fast rotation. The raised portion was not broken. After the film was rotated for 10 hours and 30 hours while the urethane rubber member abutted against the film, the friction coefficient of the surface of the film was higher than the friction coefficient in Example 1-1.

### Example 1-7

After the film was rotated for 10 hours while the urethane rubber member abutted against the film, the first portion formed a depressed portion having a width of 20 µm, the second portion formed a raised portion having a width of 20 µm, the height difference between the raised portion and the depressed portion was 0.51 µm, and the friction coefficient of the surface of the film was 0.71.

After the film was rotated for 30 hours while the urethane rubber member abutted against the film, the first portion formed a depressed portion having a width of 20 µm, the second portion formed a raised portion having a width of 20 µm, the height difference between the raised portion and the depressed portion was 0.51 µm, and the friction coefficient of the surface of the film was 0.70. Stick and slip was observed for the slow rotation but was not observed for the fast rotation. The raised portion was not broken. After the film was rotated for 10 hours and 30 hours while the urethane rubber member abutted against the film, the friction coefficient of the surface of the film was higher than the friction coefficient in Example 1-1.

### Example 1-8

After the film was rotated for 10 hours while the urethane rubber member abutted against the film, the first portion formed a depressed portion having a width of 22.7 µm, the second portion formed a raised portion having a width of 4 µm, the height difference between the raised portion and the depressed portion was 0.57 µm, and the friction coefficient of the surface of the film was 0.53.

After the film was rotated for 30 hours while the urethane rubber member abutted against the film, the first portion formed a depressed portion having a width of 22.7 µm, the second portion formed a raised portion having a width of 4 µm, the height difference between the raised portion and the depressed portion was 0.58 µm, and the friction coefficient of the surface of the film was 0.54. Stick and slip was not observed for both the slow rotation and the fast rotation, and the raised portion was not broken. Thus, it was shown that even after the film was rotated for 30 hours while the urethane rubber member abutted against the film, the film retained its surface shape and a low friction coefficient.

### Example 1-9

After the film was rotated for 10 hours while the urethane rubber member abutted against the film, the first portion formed a depressed portion having a width of 1.3 µm, the second portion formed a raised portion having a width of 4 µm, the height difference between the raised portion and the depressed portion was 0.15 µm, and the friction coefficient of the surface of the film was 0.75.

After the film was rotated for 30 hours while the urethane rubber member abutted against the film, the first portion formed a depressed portion having a width of 1.3 µm, the second portion formed a raised portion having a width of 4 µm, the height difference between the raised portion and the depressed portion was 0.16 µm, and the friction coefficient of the surface of the film was 0.73. Stick and slip was observed for the slow rotation but was not observed for the fast rotation. The raised portion was not broken. After the film was rotated for 10 hours and 30 hours while the urethane rubber member abutted against the film, the friction coefficient of the surface of the film was higher than the friction coefficient in Example 1-1.

### Example 1-10

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.26 µm, and the friction coefficient of the surface of the film was 0.45.

After the film was rotated for 30 hours while the urethane rubber member abutted against the film, each of the depressed portion and the raised portion had a width of 4.0 µm, the height difference between the raised portion and the depressed portion was 0.26 µm, and the friction coefficient of the surface of the film was 0.43. Stick and slip was not observed for both the slow rotation and the fast rotation, and the raised portion was not broken. Thus, it was shown that even after the film was rotated for 30 hours while the urethane rubber member abutted against the film, the film retained its surface shape and a low friction coefficient.

### Comparative Example 1-1

After the film was rotated for 10 hours while the urethane rubber member abutted against the film, no asperity was observed, and the friction coefficient of the surface of the film was 1.77.

After the film was rotated for 30 hours while the urethane rubber member abutted against the film, no asperity was observed, and the friction coefficient of the surface of the film was 1.74. Stick and slip occurred in both the slow rotation and the fast rotation, and unstable friction behavior was observed.

### Comparative Example 1-2

After the film was rotated for 10 hours while the urethane rubber member abutted against the film, no asperity was observed, and the friction coefficient of the surface of the film was 0.95.

After the film was rotated for 30 hours while the urethane rubber member abutted against the film, no asperity was observed, and the friction coefficient of the surface of the film was 0.91. Stick and slip occurred in both the slow rotation and the fast rotation, and unstable friction behavior was observed.

### Comparative Example 1-3

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 1.68 µm, and the friction coefficient of the surface of the film was 0.99.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 1.05 µm. This shows that the rotation of the film for 30 hours while the urethane rubber member abutted against the film resulted in the wearing of the raised portion and the gradual disappearance of the asperities. The friction coefficient of the surface of the film was 1.24. Stick and slip occurred in both the slow rotation and the fast rotation, unstable friction behavior was observed, and a broken area of the raised portion accounted for 41% of the total area of the raised portion.

### Comparative Example 1-4

After the film was rotated for 10 hours while the urethane rubber member abutted against the film, the first portion formed a depressed portion having a width of 2000 µm, the second portion formed a raised portion having a width of 500 µm, the height difference between the raised portion and the depressed portion was 1.89 µm, and the friction coefficient of the surface of the film was 1.88.

After the film was rotated for 30 hours while the urethane rubber member abutted against the film, the first portion formed a depressed portion having a width of 2000 µm, the second portion formed a raised portion having a width of 500 µm, the height difference between the raised portion and the depressed portion was 1.93 µm, and the friction coefficient of the surface of the film was 1.86. Stick and slip occurred in both the slow rotation and the fast rotation, and unstable friction behavior was observed. The raised portion was not broken.

### Comparative Example 1-5

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.11 µm, and the friction coefficient of the surface of the film was 0.97.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.10 µm, and the friction coefficient of the surface of the film was 0.97. Stick and slip occurred in both the slow rotation and the fast rotation, and unstable friction behavior was observed. The raised portion was not broken.

### Comparative Example 1-6

After the film was rotated for 10 hours while the urethane rubber member abutted against the film, the first portion formed a depressed portion having a width of 4 µm, the second portion formed a raised portion having a width of 4 µm, the height difference between the raised portion and the depressed portion was 0.66 µm, and the friction coefficient of the surface of the film was 0.99.

After the film was rotated for 30 hours while the urethane rubber member abutted against the film, the first portion formed a depressed portion having a width of 4 µm, the second portion formed a raised portion having a width of 4 µm, the height difference between the raised portion and the depressed portion was 0.64 µm, and the friction coefficient of the surface of the film was 0.92. Stick and slip occurred in both the slow rotation and the fast rotation, and unstable friction behavior was observed. The raised portion was not broken.

### Comparative Example 1-7

After the film was rotated for 10 hours while the urethane rubber member abutted against the film, the first portion formed a depressed portion having a width of 76 µm, the second portion formed a raised portion having a width of 4 µm, the height difference between the raised portion and the depressed portion was 0.77 µm, and the friction coefficient of the surface of the film was 0.95.

After the film was rotated for 30 hours while the urethane rubber member abutted against the film, the first portion formed a depressed portion having a width of 76 µm, the second portion formed a raised portion having a width of 4 µm, the height difference between the raised portion and the depressed portion was 0.75 µm, and the friction coefficient of the surface of the film was 1.23. Stick and slip occurred in both the slow rotation and the fast rotation, unstable friction behavior was observed, and a broken area of the raised portion accounted for 36% of the total area of the raised portion.

### Comparative Example 1-8

After the film was rotated for 10 hours while the urethane rubber member abutted against the film, the first portion formed a depressed portion having a width of 0.7 µm, the second portion formed a raised portion having a width of 4 µm, the height difference between the raised portion and the depressed portion was 0.11 µm, and the friction coefficient of the surface of the film was 1.05.

After the film was rotated for 30 hours while the urethane rubber member abutted against the film, the first portion formed a depressed portion having a width of 0.7 µm, the second portion formed a raised portion having a width of 4 µm, the height difference between the raised portion and the depressed portion was 0.13 µm, and the friction coefficient of the surface of the film was 1.03. Stick and slip occurred in both the slow rotation and the fast rotation, and unstable friction behavior was observed. The raised portion was not broken.

### Comparative Example 1-9

After the film was rotated for 10 hours while the urethane rubber member abutted against the film, no asperity was observed, and the friction coefficient of the surface of the film was 1.06.

After the film was rotated for 30 hours while the urethane rubber member abutted against the film, no asperity was observed, and the friction coefficient of the surface of the film was 1.02. Stick and slip occurred in both the slow rotation and the fast rotation, and unstable friction behavior was observed.

### Comparative Example 1-10

After the film was rotated for 10 hours while the urethane rubber member abutted against the film, no asperity was observed, and the friction coefficient of the surface of the film was 1.90.

After the film was rotated for 30 hours while the urethane rubber member abutted against the film, no asperity was observed, and the friction coefficient of the surface of the film was 1.88. Stick and slip occurred in both the slow rotation and the fast rotation, and unstable friction behavior was observed.

### Example 2-1

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.22 µm, and the friction coefficient of the surface of the film was 0.44.

After the film was rotated for 20 hours while the urethane rubber member abutted against the film, honeycomb asperities were observed, the height difference between the raised portion and the depressed portion was 0.25 µm, and the friction coefficient of the surface of the film was 0.43. In each 1 mm x 1 mm square, a broken area of the raised portion was less than 10% of the total area of the raised portion.

### Example 2-2

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 1 µm, the height difference between the raised portion and the depressed portion was 0.33 µm, and the friction coefficient of the surface of the film was 0.48.

After the film was rotated for 20 hours while the urethane rubber member abutted against the film, honeycomb asperities were observed, the height difference between the raised portion and the depressed portion was 0.34 µm, and the friction coefficient of the surface of the film was 0.52. In each 1 mm x 1 mm square, a broken area of the raised portion was 14% of the total area of the raised portion.

### Example 2-3

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 6 µm, the height difference between the raised portion and the depressed portion was 0.11 µm, and the friction coefficient of the surface of the film was 0.75.

After the film was rotated for 20 hours while the urethane rubber member abutted against the film, honeycomb asperities were observed, the height difference between the raised portion and the depressed portion was 0.12 µm, and the friction coefficient of the surface of the film was 0.72. In each 1 mm x 1 mm square, a broken area of the raised portion was less than 10% of the total area of the raised portion.

### Example 2-4

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.16 µm, and the friction coefficient of the surface of the film was 0.81.

After the film was rotated for 20 hours while the urethane rubber member abutted against the film, honeycomb asperities were observed, the height difference between the raised portion and the depressed portion was 0.17 µm, and the friction coefficient of the surface of the film was 0.81. In each 1 mm x 1 mm square, a broken area of the raised portion was 12% of the total area of the raised portion.

### Example 2-5

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.24 µm, and the friction coefficient of the surface of the film was 0.45.

After the film was rotated for 20 hours while the urethane rubber member abutted against the film, honeycomb asperities were observed, the height difference between the raised portion and the depressed portion was 0.34 µm, and the friction coefficient of the surface of the film was 0.85. In each 1 mm x 1 mm square, a broken area of the raised portion was less than 10% of the total area of the raised portion.

### Example 2-6

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.16 µm, and the friction coefficient of the surface of the film was 0.81.

After the film was rotated for 20 hours while the urethane rubber member abutted against the film, honeycomb asperities were observed, the height difference between the raised portion and the depressed portion was 0.16 µm, and the friction coefficient of the surface of the film was 0.86. In each 1 mm x 1 mm square, a broken area of the raised portion was 15% of the total area of the raised portion.

### Example 2-7

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.27 µm, and the friction coefficient of the surface of the film was 0.53.

After the film was rotated for 20 hours while the urethane rubber member abutted against the film, honeycomb asperities were observed, the height difference between the raised portion and the depressed portion was 0.35 µm, and the friction coefficient of the surface of the film was 0.88. In each 1 mm x 1 mm square, a broken area of the raised portion was less than 10% of the total area of the raised portion.

### Example 2-8

After the film was rotated for one hour while the urethane rubber member abutted against the film, asperities having a circular hole form were observed on the surface of the film, in which each of the holes had a diameter of 0.2 µm and a center-to-center distance of 0.4 µm, the height difference between the raised portion and the depressed portion was 0.03 µm, and the friction coefficient of the surface of the film was 0.85.

After the film was rotated for 20 hours while the urethane rubber member abutted against the film, asperities having a hole form were observed, the height difference between the raised portion and the depressed portion was 0.03 µm, and the friction coefficient of the surface of the film was 0.84. In each 1 mm x 1 mm square, a broken area of the raised portion was less than 10% of the total area of the raised portion.

### Example 2-9

After the film was rotated for one hour while the urethane rubber member abutted against the film, honeycomb asperities each having a regular hexagonal depressed portion surrounded by a raised portion were observed on the surface of the film, the side length of the regular hexagon was 50 µm, the wall thickness was 10 µm, the height difference between the raised portion and the depressed portion was 0.84 µm, and the friction coefficient of the surface of the film was 0.83.

After the film was rotated for 20 hours while the urethane rubber member abutted against the film, honeycomb asperities were observed, the height difference between the raised portion and the depressed portion was 0.89 µm, and the friction coefficient of the surface of the film was 0.86. In each 1 mm x 1 mm square, a broken area of the raised portion was 15% of the total area of the raised portion.

### Comparative Example 2-1

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 17 µm, and the friction coefficient of the surface of the film was 0.78.

After the film was rotated for 20 hours while the urethane rubber member abutted against the film, honeycomb asperities were observed, the height difference between the raised portion and the depressed portion was 16 µm, and the friction coefficient of the surface of the film was 0.92. In each 1 mm x 1 mm square, a broken area of the raised portion was 23% of the total area of the raised portion.

### Comparative Example 2-2

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 0.5 µm, the height difference between the raised portion and the depressed portion was 0.35 µm, and the friction coefficient of the surface of the film was 0.54.

After the film was rotated for 20 hours while the urethane rubber member abutted against the film, honeycomb asperities were observed, the height difference between the raised portion and the depressed portion was 0.39 µm, and the friction coefficient of the surface of the film was 0.94. In each 1 mm x 1 mm square, a broken area of the raised portion was 27% of the total area of the raised portion.

### Comparative Example 2-3

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 8 µm, the height difference between the raised portion and the depressed portion was 0.07 µm, and the friction coefficient of the surface of the film was 0.96.

After the film was rotated for 20 hours while the urethane rubber member abutted against the film, honeycomb asperities were observed, the height difference between the raised portion and the depressed portion was 0.07 µm, and the friction coefficient of the surface of the film was 0.95. In each 1 mm x 1 mm square, a broken area of the raised portion was less than 10% of the total area of the raised portion.

### Comparative Example 2-4

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.27 µm, and the friction coefficient of the surface of the film was 0.49.

After the film was rotated for 20 hours while the urethane rubber member abutted against the film, honeycomb asperities were observed, the height difference between the raised portion and the depressed portion was 0.42 µm, and the friction coefficient of the surface of the film was 0.99. In each 1 mm x 1 mm square, a broken area of the raised portion was less than 10% of the total area of the raised portion.

### Comparative Example 2-5

After the film was rotated for one hour while the urethane rubber member abutted against the film, honeycomb asperities each having a regular hexagonal depressed portion surrounded by a raised portion were observed on the surface of the film, the side length of the regular hexagon was 10 µm, the wall thickness was 2 µm, the height difference between the raised portion and the depressed portion was 0.22 µm, and the friction coefficient of the surface of the film was 0.47.

After the film was rotated for 20 hours while the urethane rubber member abutted against the film, no asperity was observed, and the friction coefficient of the surface of the film was 1.61. Criteria for Friction coefficient

For Examples 1-1 to 1-10 and Comparative Examples 1-1 to 1-9, the friction coefficient was evaluated in accordance with the following three criteria.
A: After the film was rotated for 10 or 30 hours while the urethane rubber member abutted against the film, the friction coefficient of the surface of the film was 0.60 or less.
B: After the film was rotated for 10 or 30 hours while the urethane rubber member abutted against the film, the friction coefficient of the surface of the film was 0.61 or more and 0.80 or less.
C: After the film was rotated for 10 or 30 hours while the urethane rubber member abutted against the film, the friction coefficient of the surface of the film was 0.81 or more.

For Examples 2-1 to 2-9 and Comparative Examples 2-1 to 2-5, the friction coefficient was evaluated in accordance with the following three criteria.
A: After the film was rotated for 1 or 20 hours while the urethane rubber member abutted against the film, the friction coefficient of the surface of the film was 0.60 or less.
B: After the film was rotated for 1 or 20 hours while the urethane rubber member abutted against the film, the friction coefficient of the surface of the film was 0.61 or more and 0.90 or less.
C: After the film was rotated for 1 or 20 hours while the urethane rubber member abutted against the film, the friction coefficient of the surface of the film was 0.91 or more.

Table 3 summarizes the results.

**[Table 3]**

| | Friction coefficient | | | | Stick and slip | Destruction of Raised Portion |
|---|---|---|---|---|---|---|
| | After 1-h rotation | After 10-h rotation | After 20-h rotation | After 30-h rotation | | |
| Example 1-1 | | A | | A | A | A |
| Example 1-2 | | A | | A | A | A |
| Example 1-3 | | A | | A | A | A |
| Example 1-4 | | B | | B | B | A |
| Example 1-5 | | B | | B | B | A |
| Example 1-6 | | B | | B | B | A |
| Example 1-7 | | B | | B | B | A |
| Example 1-8 | | A | | A | A | A |
| Example 1-9 | | B | | B | B | A |
| Example 1-10 | | A | | A | A | A |
| Comparative Example 1-1 | | C | | C | C | - |
| Comparative Example 1-2 | | C | | C | C | - |
| Comparative Example 1-3 | | C | | C | C | C |
| Comparative Example 1-4 | | C | | C | C | A |
| Comparative Example 1-5 | | C | | C | C | A |
| Comparative Example 1-6 | | C | | C | C | A |
| Comparative Example 1-7 | | C | | C | C | C |
| Comparative Example 1-8 | | C | | C | C | A |
| Comparative Example 1-9 | | C | | C | C | - |
| Comparative Example 1-10 | | C | | C | C | - |
| Example 2-1 | A | | A | | | A |
| Example 2-2 | A | | A | | | B |
| Example 2-3 | B | | B | | | A |
| Example 2-4 | B | | B | | | B |
| Example 2-5 | A | | B | | | A |
| Example 2-6 | B | | B | | | B |
| Example 2-7 | A | | B | | | A |
| Example 2-8 | B | | B | | | A |
| Example 2-9 | B | | B | | | B |
| Comparative Example 2-1 | B | | C | | | C |
| Comparative Example 2-2 | A | | C | | | C |
| Comparative Example 2-3 | C | | C | | | A |
| Comparative Example 2-4 | A | | C | | | A |
| Comparative Example 2-5 | A | | C | | | - |

### (9) Evaluation Result 2

### Example 3-1

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.33.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.24 µm, and the friction coefficient of the surface of the film was 0.33. Optical microscope observation showed the accumulation of a lubricant abrasion powder produced by the wearing of the film containing the lubricant (hereinafter referred to as an abrasion powder) in the depressed portion.

### Example 3-2

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.22 µm, and the friction coefficient of the surface of the film was 0.32.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.21 µm, and the friction coefficient of the surface of the film was 0.27. Optical microscope observation showed the accumulation of an abrasion powder in the depressed portion.

### Example 3-3

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.28 µm, and the friction coefficient of the surface of the film was 0.37.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.24 µm, and the friction coefficient of the surface of the film was 0.35. Optical microscope observation showed the accumulation of an abrasion powder in the depressed portion.

### Example 3-4

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.23 µm, and the friction coefficient of the surface of the film was 0.35.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.23 µm, and the friction coefficient of the surface of the film was 0.35. Optical microscope observation showed the accumulation of an abrasion powder in the depressed portion.

### Example 3-5

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.27 µm, and the friction coefficient of the surface of the film was 0.65.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.26 µm, and the friction coefficient of the surface of the film was 0.64. Optical microscope observation showed the accumulation of an abrasion powder in the depressed portion.

### Example 3-6

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.53.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.50. Optical microscope observation showed the accumulation of an abrasion powder in the depressed portion.

### Example 3-7

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.26 µm, and the friction coefficient of the surface of the film was 0.26.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.26. Optical microscope observation showed the accumulation of an abrasion powder in the depressed portion.

### Example 3-8

After the film was rotated for one hour while the urethane rubber member abutted against the film, a hole form was observed on the film in which each of the holes had a diameter of 4.0 µm, the height difference between the raised portion and the depressed portion was 0.25 µm, and the friction coefficient of the surface of the film was 0.32.

After the film was rotated for 20 hours while the urethane rubber member abutted against the film, a hole form was observed on the film in which each of the holes had a diameter of 4.0 µm, the height difference between the raised portion and the depressed portion was 0.25 µm, and the friction coefficient of the surface of the film was 0.22. Optical microscope observation showed the accumulation of an abrasion powder in the depressed portion.

### Example 3-9

After the film was rotated for one hour while the urethane rubber member abutted against the film, a honeycomb form was observed on the film in which the maximum distance between opposite apexes was 4.0 µm, the height difference between the raised portion and the depressed portion was 0.24 µm, and the friction coefficient of the surface of the film was 0.32.

After the film was rotated for 20 hours while the urethane rubber member abutted against the film, a honeycomb form was observed on the film in which the maximum distance between opposite apexes was 3.9 µm, the height difference between the raised portion and the depressed portion was 0.24 µm, and the friction coefficient of the surface of the film was 0.20. Optical microscope observation showed the accumulation of an abrasion powder in the depressed portion.

### Example 3-10

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.26 µm, and the friction coefficient of the surface of the film was 0.35.

After the film was rotated for 20 hours while the urethane rubber member abutted against the film, the first portion formed a depressed portion having a width of 4.2 µm, the second portion formed a raised portion having a width of 3.8 µm, the height difference between the raised portion and the depressed portion was 0.26 µm, and the friction coefficient of the surface of the film was 0.31. Optical microscope observation showed the accumulation of an abrasion powder in the depressed portion.

### Example 3-11

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.26 µm, and the friction coefficient of the surface of the film was 0.52.

After the film was rotated for 20 hours while the urethane rubber member abutted against the film, the first portion formed a depressed portion having a width of 4.1 µm, the second portion formed a raised portion having a width of 3.9 µm, the height difference between the raised portion and the depressed portion was 0.25 µm, and the friction coefficient of the surface of the film was 0.47. Optical microscope observation showed the accumulation of an abrasion powder in the depressed portion.

### Example 3-12

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.32.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.28. Optical microscope observation showed the accumulation of an abrasion powder in the depressed portion.

### Example 3-13

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.42.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.38. Optical microscope observation showed the accumulation of an abrasion powder in the depressed portion.

### Example 3-14

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.32.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.27. Optical microscope observation showed the accumulation of an abrasion powder in the depressed portion.

### Example 3-15

After the film was rotated for one hour while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.32.

After the film was rotated for 20 hours while the urethane rubber member abutted against the film, the first portion formed a depressed portion having a width of 4.0 µm, the second portion formed a raised portion having a width of 4.0 µm, the height difference between the raised portion and the depressed portion was 0.25 µm, and the friction coefficient of the surface of the film was 0.28. Optical microscope observation showed the accumulation of an abrasion powder in the depressed portion.

### Comparative Example 3-1

After the film was rotated for one hour while the urethane rubber member abutted against the film, no asperity was observed, and the friction coefficient of the surface of the film was 0.33.

After the film was rotated for 20 hours while the urethane rubber member abutted against the film, no asperity was observed, and the friction coefficient of the surface of the film was 0.52. An abrasion powder was produced by friction but was immediately removed from the friction surface.

### Comparative Example 3-2

After the film was rotated for one hour while the urethane rubber member abutted against the film, no asperity was observed, and the friction coefficient of the surface of the film was 0.35.

After the film was rotated for 20 hours while the urethane rubber member abutted against the film, no asperity was observed, and the friction coefficient of the surface of the film was 0.53. An abrasion powder was produced by friction but was immediately removed from the friction surface.

A reduction rate defined as described below was used as a measure of an effect of preventing an increase in the friction coefficient resulting from the abrasion powder flowing out of the wearing surface. A reduction rate of less than 0% indicates an increase in the friction coefficient with use.

Reduction rate = (the friction coefficient of a film after the film was rotated for one hour while a urethane rubber member abutted against the film - the friction coefficient of the film after the film was rotated for 20 hours while the urethane rubber member abutted against the film)/(the friction coefficient of the film after the film was rotated for one hour while the urethane rubber member abutted against the film) x 100

Table 4 summarizes the results.

**[Table 4]**

| | Friction coefficient | | Reduction rate [%] |
|---|---|---|---|
| | After 1-h rotation | After 20-h rotation | |
| Example 3-1 | 0.33 | 0.33 | 0 |
| Example 3-2 | 0.32 | 0.27 | 16 |
| Example 3-3 | 0.37 | 0.35 | 5 |
| Example 3-4 | 0.35 | 0.35 | 0 |
| Example 3-5 | 0.65 | 0.64 | 2 |
| Example 3-6 | 0.53 | 0.50 | 6 |
| Example 3-7 | 0.26 | 0.26 | 0 |
| Example 3-8 | 0.32 | 0.22 | 31 |
| Example 3-9 | 0.32 | 0.20 | 38 |
| Example 3-10 | 0.35 | 0.31 | 11 |
| Example 3-11 | 0.52 | 0.47 | 10 |
| Example 3-12 | 0.32 | 0.28 | 13 |
| Example 3-13 | 0.42 | 0.38 | 10 |
| Example 3-14 | 0.32 | 0.27 | 16 |
| Example 3-15 | 0.32 | 0.28 | 13 |
| Comparative Example 3-1 | 0.33 | 0.52 | -58 |
| Comparative Example 3-2 | 0.35 | 0.53 | -51 |

### Photomask for Use in Fabrication of Electrophotographic Photosensitive Member

A photomask for use in the fabrication of an electrophotographic photosensitive member was prepared as described below. Fig. 8 illustrates the line width and the opening size of a square nickel mesh or a plain-woven stainless steel mesh. Fig. 9 illustrates the line width and the opening size of a honeycomb nickel mesh.

### Photomask 1 for Use in Fabrication of Electrophotographic Photosensitive Member

A square nickel mesh having a line width of 10 µm, an opening size of 6 µm, and an opening ratio 14% (trade name: #1500, manufactured by Clever Co., Ltd.) was used as a photomask 1 for use in the fabrication of an electrophotographic photosensitive member.

### Photomasks 2 to 5 for Use in Fabrication of Electrophotographic Photosensitive Member

Square nickel meshes having the line width, the opening size, and the opening ratio listed in Table 5 were used as photomasks 2 to 5 for use in the fabrication of an electrophotographic photosensitive member.

### Photomasks 6 to 8 for Use in Fabrication of Electrophotographic Photosensitive Member

Honeycomb nickel meshes having the line width, the opening size, and the opening ratio listed in Table 5 were used as photomasks 6 to 8 for use in the fabrication of an electrophotographic photosensitive member.

### Photomask 9 for Use in Fabrication of Electrophotographic Photosensitive Member

A surface of a transparent polymer film having a thickness of 40 µm (trade name: Zeonor film ZF14-040, manufactured by Optes Inc.) was subjected to corona treatment for hydrophilization. Gold was deposited on the transparent polymer film to a thickness of 100 nm while the photomask 1 was placed on the transparent polymer film, forming a square pattern (the area percentage of the deposited gold pattern: 64%). The polymer film was used as a photomask 9 for use in the fabrication of an electrophotographic photosensitive member. The area percentage of the deposited gold pattern of the photomask 9 was 64%. The photomask 9 had a square pattern size (corresponding to the opening size in Fig. 8) of 15 µm.

### Photomasks 10 to 16 for Use in Fabrication of Electrophotographic Photosensitive Member

Square patterns were formed in the same manner as in the photomask 9 for use in the fabrication of an electrophotographic photosensitive member except that photomasks 2 to 8 were placed on the transparent polymer film in gold vapor deposition. These polymer films were used as photomasks 10 to 16 for use in the fabrication of an electrophotographic photosensitive member. The area percentage of the deposited gold pattern of the photomask 10 was 36%. The area percentage of the deposited gold pattern of the photomask 11 was 46%. The area percentage of the deposited gold pattern of the photomask 12 was 64%. The area percentage of the deposited gold pattern of the photomask 13 was 78%. The area percentage of the deposited gold pattern of the photomask 14 was 34%. The area percentage of the deposited gold pattern of the photomask 15 was 23%. The area percentage of the deposited gold pattern of the photomask 16 was 62%. The photomask 10 had a square pattern size (corresponding to the opening size in Fig. 8) of 15 µm. The photomask 11 had a square pattern size (corresponding to the opening size in Fig. 8) of 17 µm. The photomask 12 had a square pattern size (corresponding to the opening size in Fig. 8) of 25 µm. The photomask 13 had a square pattern size (corresponding to the opening size in Fig. 8) of 45 µm. The photomask 14 had a honeycomb pattern size (corresponding to the opening size in Fig. 9) of 16 µm. The photomask 15 had a honeycomb pattern size (corresponding to the opening size in Fig. 9) of 16 µm. The photomask 16 had a honeycomb pattern size (corresponding to the opening size in Fig. 9) of 21 µm.

### Photomask 101 for Use in Fabrication of Electrophotographic Photosensitive Member

A square plain-woven stainless steel mesh having a line width of 1000 µm, an opening size of 1500 µm, and an opening ratio 36% was used as a photomask 101 for use in the fabrication of an electrophotographic photosensitive member. Photomask 102 for Use in Fabrication of Electrophotographic Photosensitive Member

A square nickel mesh having a line width of 18 µm, an opening size of 7 µm, and an opening ratio 8% (trade name: #1000, manufactured by Clever Co., Ltd.) was used as a photomask 102 for use in the fabrication of an electrophotographic photosensitive member.

### Photomask 103 for Use in Fabrication of Electrophotographic Photosensitive Member

A square nickel mesh having a line width of 4.5 µm, an opening size of 46.5 µm, and an opening ratio 83% (trade name: #500, manufactured by Clever Co., Ltd.) was used as a photomask 103 for use in the fabrication of an electrophotographic photosensitive member.

### Photomasks 104 to 106 for Use in Fabrication of Electrophotographic Photosensitive Member

Square patterns were prepared in the same manner as in the photomask 9 for use in the fabrication of an electrophotographic photosensitive member except that photomasks 101 to 103 were placed on the transparent polymer film in gold vapor deposition. These polymer films were used as photomasks 104 to 106 for use in the fabrication of an electrophotographic photosensitive member. The area percentage of the deposited gold pattern of the photomask 104 was 22%. The area percentage of the deposited gold pattern of the photomask 105 was 8%. The area percentage of the deposited gold pattern of the photomask 106 was 83%. The photomask 104 had a square pattern size (corresponding to the opening size in Fig. 8) of 1500 µm. The photomask 105 had a square pattern size (corresponding to the opening size in Fig. 8) of 7 µm. The photomask 106 had a square pattern size (corresponding to the opening size in Fig. 8) of 46.5 µm.

**[Table 5]**

| Photomask for use in fabrication of electrophotographic photosensitive member | Line width [µm] | Opening size [µm] | Opening ratio [%] | Material | Shape |
|---|---|---|---|---|---|
| 1 | 10 | 6 | 14 | Nickel | Square mesh |
| 2 | 10 | 15 | 36 | Nickel | Square mesh |
| 3 | 8 | 17 | 46 | Nickel | Square mesh |
| 4 | 5 | 25 | 64 | Nickel | Square mesh |
| 5 | 6 | 45 | 78 | Nickel | Square mesh |
| 6 | 10 | 16 | 34 | Nickel | Honeycomb mesh |
| 7 | 15 | 16 | 23 | Nickel | Honeycomb mesh |
| 8 | 5 | 21 | 62 | Nickel | Honeycomb mesh |
| 9 | - | - | - | Transparent polymer film + Gold deposition | Square pattern |
| 10 | - | - | - | Transparent polymer film + Gold deposition | Square pattern |
| 11 | - | - | - | Transparent polymer film + Gold deposition | Square pattern |
| 12 | - | - | - | Transparent polymer film + Gold deposition | Square pattern |
| 13 | - | - | - | Transparent polymer film + Gold deposition | Square pattern |
| 14 | - | - | - | Transparent polymer film + Gold deposition | Honeycomb pattern |
| 15 | - | - | - | Transparent polymer film + Gold deposition | Honeycomb pattern |
| 16 | - | - | - | Transparent polymer film + Gold deposition | Honeycomb pattern |
| 101 | 1000 | 1500 | 36 | Stainless steel | Square mesh |
| 102 | 18 | 7 | 8 | Nickel | Square mesh |
| 103 | 4.5 | 46.5 | 83 | Nickel | Square mesh |
| 104 | - | - | - | Transparent polymer film + Gold deposition | Square pattern |
| 105 | - | - | - | Transparent polymer film + Gold deposition | Square pattern |
| 106 | - | - | - | Transparent polymer film + Gold deposition | Square pattern |

### Electrophotographic Photosensitive Member

### Electrophotographic Photosensitive Member 1

An aluminum cylinder having a diameter of 30 mm, a length of 357.5 mm, and a thickness of 0.75 mm was used as a support (electroconductive support).

A polyamide (trade name: Amilan CM8000, manufactured by Toray Industries, Inc.) was dissolved in methanol to prepare a coating liquid for an undercoat layer (the polyamide content was 5% by mass). The coating liquid for an undercoat layer was applied to the support by dip coating and was dried to form an undercoat layer having a thickness of 0.5 µm.

3.5 parts by mass of hydroxy gallium phthalocyanine crystals (a charge-generating substance), which have strong peaks at Bragg angles (2θ ± 0.2 degrees) of 7.4 and 28.2 degrees in CuKα characteristic X-ray diffraction, 1 part by mass of poly(vinyl butyral) (trade name: S-Lec BX-1, manufactured by Sekisui Chemical Co., Ltd.), and 120 parts by mass of cyclohexanone were dispersed in a sand mill with glass beads having a diameter of 1 mm for three hours. 120 parts by mass of ethyl acetate was added to the mixture to prepare a coating liquid for a charge-generating layer. The coating liquid for a charge-generating layer was applied to an undercoat layer by dip coating and was dried at 100°C for 10 minutes to form the charge-generating layer having a thickness of 0.15 µm.

A coating liquid for a charge-transport layer prepared in the same manner as in Example 1-3 was applied to the charge-generating layer by dip coating and was dried at 125°C for 80 minutes to form the charge-transport layer having a thickness of 20 µm. Through these processes, a plurality of electrophotographic photosensitive members 1 were fabricated.

### Electrophotographic Photosensitive Member 2

Sixty parts by mass of dipentaerythritol hexaacrylate (trade name: Kayarad DPHA, manufactured by Nippon Kayaku Co., Ltd.), 60 parts by mass of tin oxide particles having an average particle size of 0.03 µm before dispersion, 20 parts by mass of 2,2-dimethoxy-1,2-diphenylethane-1-one (trade name: IRGACURE 651, manufactured by BASF) serving as a photopolymerization initiator, and 400 parts by mass of methanol were dispersed in a sand mill for 66 hours to prepare a coating liquid for a surface layer. The coating liquid for a surface layer was applied to the charge-transport layer of one of the electrophotographic photosensitive members 1 by dip coating and was irradiated with ultraviolet rays of a high-pressure mercury lamp such that the coating film had hardness of approximately 0.14 GPa, thus forming the surface layer. Through these processes, a plurality of electrophotographic photosensitive members 2 were fabricated. The electrophotographic photosensitive members 2 had a surface hardness of 0.14 GPa and a surface layer thickness of 3 µm.

### Electrophotographic Photosensitive Member 3

One of the electrophotographic photosensitive members 2 was again irradiated with ultraviolet rays of the high-pressure mercury lamp for photo-curing and was subjected to post-baking at 130°C for one hour to fabricate an electrophotographic photosensitive member 3. The electrophotographic photosensitive member 3 had a surface hardness of 0.52 GPa and a surface layer thickness of 3 µm. Electrophotographic Photosensitive Member 4

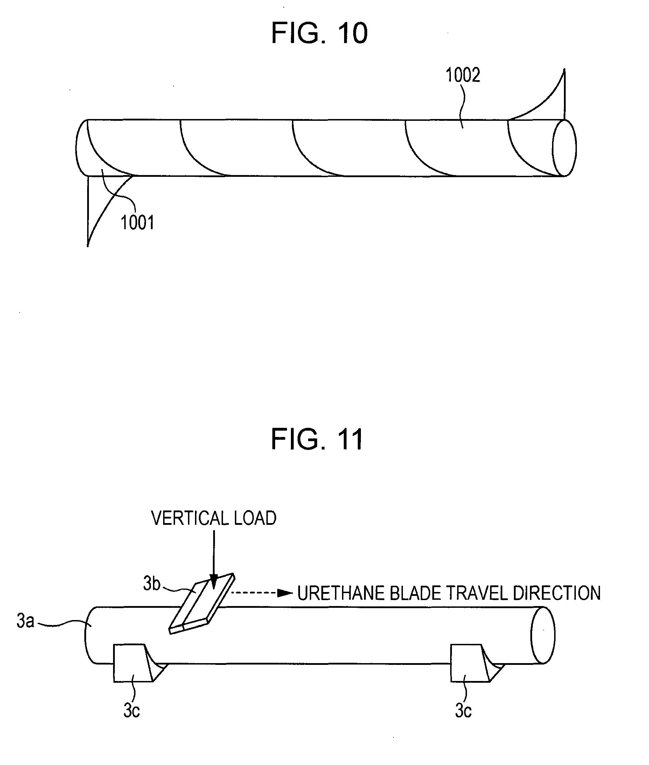

The photomask 1 for use in the fabrication of an electrophotographic photosensitive member was cut into a piece having a width of 5 cm, which was then placed around one of the electrophotographic photosensitive members 2 as illustrated in Fig. 10 (in Fig. 10, a photomask 1002 was placed around an electrophotographic photosensitive member 1001) and was again irradiated with ultraviolet rays of the high-pressure mercury lamp for photo-curing. After the photomask 1 was removed, post-baking at 130°C for one hour yielded an electrophotographic photosensitive member 4. In the electrophotographic photosensitive member 4, a first portion (low hardness portion) had hardness of 0.18 GPa, and a second portion (high hardness portion) had hardness of 0.48 GPa. The ratio of the hardness of the second portion (high hardness portion) to the hardness of the first portion (low hardness portion) was 2.7. In a 1 mm x 1 mm square region disposed on an arbitrary position of the surface of the surface layer of the electrophotographic photosensitive member 4, a second surface region formed of the second portion (high hardness portion) accounted for 14% by area of the square region, and a first surface region formed of the first portion (low hardness portion) and the second surface region accounted for 100% by area of the square region. Both the first portion (low hardness portion) and the second portion (high hardness portion) of the electrophotographic photosensitive member 4 passed through the surface layer. Electrophotographic Photosensitive Members 5 to 9 and 101 to 105

Electrophotographic photosensitive members 5 to 9 and 101 to 105 were fabricated in the same manner as in the electrophotographic photosensitive member 4 except that the photomask 1 for use in the fabrication of an electrophotographic photosensitive member was replaced by a photomask listed in Table 6. Table 6 summarizes the area percentage of a second surface region formed of the second portion (high hardness portion) in a 1 mm x 1 mm square region disposed on an arbitrary position of the surface of the surface layer of the electrophotographic photosensitive members 5 to 9 and 101 to 105, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive members 5 to 9 and 101 to 105. In the electrophotographic photosensitive members 5 to 9 and 101 to 105, both the first portion (low hardness portion) and the second portion (high hardness portion) of the surface layer passed through the surface layer. In the electrophotographic photosensitive members 5 to 9 and 101 to 105, a first surface region formed of the first portion (low hardness portion) and the second surface region accounted for 100% by area of the square region. Electrophotographic Photosensitive Member 10

Sixty parts by mass of dipentaerythritol hexaacrylate (trade name: Kayarad DPHA, manufactured by Nippon Kayaku Co., Ltd.), 60 parts by mass of tin oxide particles having an average particle size of 0.03 m before dispersion, 20 parts by mass of 2,2-dimethoxy-1,2-diphenylethane-1-one (trade name: IRGACURE 651, manufactured by BASF) serving as a photopolymerization initiator, and 400 parts by mass of methanol were dispersed in a sand mill for 66 hours to prepare a coating liquid for a surface layer. The coating liquid for a surface layer was applied to the charge-transport layer of one of the electrophotographic photosensitive members 1 by dip coating and was irradiated with ultraviolet rays of a high-pressure mercury lamp such that the coating film had hardness of approximately 0.31 GPa, forming the surface layer having a thickness of 3 µm. Thus, an electrophotographic photosensitive member was fabricated.

The photomask 12 for use in the fabrication of an electrophotographic photosensitive member was cut into a piece having a width of 5 cm, which was then placed around the electrophotographic photosensitive member as illustrated in Fig. 10 and was again irradiated with ultraviolet rays of the high-pressure mercury lamp for photo-curing. After the photomask 12 was removed, post-baking at 130°C for one hour yielded an electrophotographic photosensitive member 10. Table 6 summarizes the area percentage of a second surface region formed of the second portion (high hardness portion) in a 1 mm x 1 mm square region disposed on an arbitrary position of the surface of the surface layer of the electrophotographic photosensitive member 10, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive member 10. Both the first portion (low hardness portion) and the second portion (high hardness portion) of the electrophotographic photosensitive member 10 passed through the surface layer. A first surface region formed of the first portion (low hardness portion) and the second surface region of the electrophotographic photosensitive member 10 accounted for 100%.

**[Table 6]**

| Electrophotographic photosensitive member | Photomask | Second surface region [%] | Hardness of first portion [GPa] | Hardness of second portion [GPa] | Ratio of hardness of second portion to hardness of first portion |
|---|---|---|---|---|---|
| 1 | - | - | - | - | - |
| 2 | - | - | - | - | - |
| 3 | - | - | - | - | - |
| 4 | 1 | 14 | 0.18 | 0.48 | 2.7 |
| 5 | 6 | 35 | 0.17 | 0.49 | 2.9 |
| 6 | 12 | 36 | 0.16 | 0.50 | 3.1 |
| 7 | 10 | 64 | 0.17 | 0.51 | 3.0 |
| 8 | 5 | 78 | 0.15 | 0.51 | 3.4 |
| 9 | 8 | 63 | 0.17 | 0.49 | 2.9 |
| 10 | 12 | 36 | 0.32 | 0.36 | 1.1 |
| 101 | 101 | 0 - 100 | 0.14 | 0.52 | 3.7 |
| 102 | 102 | 8 | 0.19 | 0.49 | 2.6 |
| 103 | 103 | 85 | 0.19 | 0.51 | 2.7 |
| 104 | 104 | 0 - 100 | 0.14 | 0.52 | 3.7 |
| 105 | 105 | 92 | 0.16 | 0.51 | 3.2 |

### Electrophotographic Photosensitive Member 11

A plurality of electrophotographic photosensitive members 11 were fabricated in the same manner as in the electrophotographic photosensitive member 2 except that the coating liquid for a surface layer was changed as described below.

Sixty parts by mass of dipentaerythritol hexaacrylate (trade name: Kayarad DPHA, manufactured by Nippon Kayaku Co., Ltd.), 60 parts by mass of tin oxide particles having an average particle size of 0.04 µm before dispersion, 50 parts by mass of polytetrafluoroethylene particles (average particle size 0.18 µm), 20 parts by mass of 2,2-dimethoxy-1,2-diphenylethane-1-one (trade name: IRGACURE 651, manufactured by BASF) serving as a photopolymerization initiator, and 400 parts by mass of methanol were dispersed in a sand mill for 66 hours to prepare a coating liquid for a surface layer. The electrophotographic photosensitive members 11 had a surface hardness of 0.14 GPa and a surface layer thickness of 3 µm. Electrophotographic Photosensitive Member 12

An electrophotographic photosensitive member 12 was fabricated in the same manner as in the electrophotographic photosensitive member 3 except that the coating liquid for a surface layer was changed as described below. The electrophotographic photosensitive member 12 had a surface hardness of 0.52 GPa and a surface layer thickness of 3 µm.

Sixty parts by mass of dipentaerythritol hexaacrylate (trade name: Kayarad DPHA, manufactured by Nippon Kayaku Co., Ltd.), 60 parts by mass of tin oxide particles having an average particle size of 0.04 µm before dispersion, 50 parts by mass of polytetrafluoroethylene particles (average particle size 0.18 µm), 20 parts by mass of 2,2-dimethoxy-1,2-diphenylethane-1-one (trade name: IRGACURE 651, manufactured by BASF) serving as a photopolymerization initiator, and 400 parts by mass of methanol were dispersed in a sand mill for 66 hours to prepare a coating liquid for a surface layer. Electrophotographic Photosensitive Member 13

The photomask 1 for use in the fabrication of an electrophotographic photosensitive member was cut into a piece having a width of 5 cm, which was then placed around one of the electrophotographic photosensitive members 11 as illustrated in Fig. 10 and was again irradiated with ultraviolet rays of the high-pressure mercury lamp for photo-curing. After the photomask was removed, post-baking at 130°C for one hour yielded an electrophotographic photosensitive member 13. In the electrophotographic photosensitive member 13, a first portion (low hardness portion) had hardness of 0.19 GPa, and a second portion (high hardness portion) had hardness of 0.48 GPa. The ratio of the hardness of the second portion (high hardness portion) to the hardness of the first portion (low hardness portion) was 2.5. In a 1 mm x 1 mm square region disposed on an arbitrary position of the surface of the surface layer of the electrophotographic photosensitive member 13, a second surface region formed of the second portion (high hardness portion) accounted for 13% by area of the square region, and a first surface region formed of the first portion (low hardness portion) and the second surface region accounted for 100% by area of the square region. Both the first portion (low hardness portion) and the second portion (high hardness portion) of the electrophotographic photosensitive member 13 passed through the surface layer. Electrophotographic Photosensitive Members 14 to 27

Electrophotographic photosensitive members 14 to 27 were fabricated in the same manner as in the electrophotographic photosensitive member 13 except that the photomask 1 for use in the fabrication of an electrophotographic photosensitive member was replaced by a photomask listed in Table 7. Table 7 summarizes the area percentage of a second surface region formed of the second portion (high hardness portion) in a 1 mm x 1 mm square region disposed on an arbitrary position of the surface of the surface layer of the electrophotographic photosensitive members 14 to 27, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive members 14 to 27. In the electrophotographic photosensitive members 14 to 27, both the first portion (low hardness portion) and the second portion (high hardness portion) of the surface layer passed through the surface layer. In the electrophotographic photosensitive members 14 to 27, a first surface region formed of the first portion (low hardness portion) and the second surface region accounted for 100% by area of the square region.

### Electrophotographic Photosensitive Members 28 and 29

Electrophotographic photosensitive members 28 and 29 were fabricated in the same manner as in the electrophotographic photosensitive member 24 except that the irradiation intensity of ultraviolet rays after the photomask was placed around the electrophotographic photosensitive member was increased such that the hardness of the first portion (low hardness portion), the hardness of the second portion (high hardness portion), and the ratio of the hardness of the second portion (high hardness portion) to the hardness of the first portion (low hardness portion) were changed as listed in Table 7. Table 7 summarizes the area percentage of a second surface region formed of the second portion (high hardness portion) in a 1 mm x 1 mm square region disposed on an arbitrary position of the surface of the surface layer of the electrophotographic photosensitive members 28 and 29, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive members 28 and 29. In the electrophotographic photosensitive members 28 and 29, both the first portion (low hardness portion) and the second portion (high hardness portion) of the surface layer passed through the surface layer. In the electrophotographic photosensitive members 28 and 29, a first surface region formed of the first portion (low hardness portion) and the second surface region accounted for 100% by area of the square region.

**[Table 7]**

| Electrophotographic photosensitive member | Photomask | Second surface region [%] | Hardness of first portion [GPa] | Hardness of second portion [GPa] | Ratio of hardness of second portion to hardness of first portion |
|---|---|---|---|---|---|
| 11 | - | - | - | - | - |
| 12 | - | - | - | - | - |
| 13 | 1 | 13 | 0.19 | 0.48 | 2.5 |
| 14 | 2 | 38 | 0.17 | 0.50 | 2.9 |
| 15 | 3 | 47 | 0.16 | 0.51 | 3.2 |
| 16 | 4 | 66 | 0.15 | 0.50 | 3.3 |
| 17 | 5 | 78 | 0.16 | 0.52 | 3.3 |
| 18 | 6 | 35 | 0.16 | 0.48 | 3.0 |
| 19 | 7 | 25 | 0.17 | 0.55 | 3.2 |
| 20 | 8 | 63 | 0.13 | 0.48 | 3.7 |
| 21 | 10 | 65 | 0.14 | 0.52 | 3.7 |
| 22 | 11 | 55 | 0.16 | 0.51 | 3.2 |
| 23 | 12 | 35 | 0.17 | 0.50 | 2.9 |
| 24 | 13 | 21 | 0.17 | 0.49 | 2.9 |
| 25 | 14 | 65 | 0.16 | 0.50 | 3.1 |
| 26 | 15 | 77 | 0.15 | 0.48 | 3.2 |
| 27 | 16 | 36 | 0.18 | 0.46 | 2.6 |
| 28 | 14 | 66 | 0.19 | 0.68 | 3.6 |
| 29 | 14 | 67 | 0.19 | 1.12 | 5.9 |

### Electrophotographic Photosensitive Member 30

Five parts by mass of dipentaerythritol hexaacrylate (trade name: Kayarad DPHA, manufactured by Nippon Kayaku Co., Ltd.) and 20 parts by mass of an exemplary compound No. 14 (a compound having the structural formula (14)) were dissolved in a mixed solvent of 60 parts by mass of ethanol and 15 parts by mass of methyl ethyl ketone to prepare a coating liquid for a surface layer. The coating liquid for a surface layer was applied to the charge-transport layer of one of the electrophotographic photosensitive members 1 by dip coating and was irradiated with an electron beam such that the coating film had hardness of approximately 0.20 GPa, thus forming the surface layer. Through these processes, a plurality of electrophotographic photosensitive members 30 were fabricated. The electrophotographic photosensitive members 30 had a surface hardness of 0.20 GPa and a surface layer thickness of 3 µm.

### Electrophotographic Photosensitive Member 31

An electrophotographic photosensitive member 31 was fabricated in the same manner as in the electrophotographic photosensitive member 30 except that the coating liquid for a surface layer was irradiated with a higher dose of electron beam and was then subjected to post-baking at 120°C for one hour. The electrophotographic photosensitive member 31 had a surface hardness of 0.75 GPa and a surface layer thickness of 3 µm.

### Electrophotographic Photosensitive Member 32

The photomask 1 for use in the fabrication of an electrophotographic photosensitive member was cut into a piece having a width of 5 cm, which was then placed around one of the electrophotographic photosensitive members 30 as illustrated in Fig. 10 and was again irradiated with an electron beam for electron beam curing. After the photomask was removed, post-baking at 120°C for one hour yielded an electrophotographic photosensitive member 32. In the electrophotographic photosensitive member 32, a first portion (low hardness portion) had hardness of 0.20 GPa, and a second portion (high hardness portion) had hardness of 0.74 GPa. The ratio of the hardness of the second portion (high hardness portion) to the hardness of the first portion (low hardness portion) was 3.7. In a 1 mm x 1 mm square region disposed on an arbitrary position of the surface of the surface layer of the electrophotographic photosensitive member 32, a second surface region formed of the second portion (high hardness portion) accounted for 15% by area of the square region, and a first surface region formed of the first portion (low hardness portion) and the second surface region accounted for 100% by area of the square region. Both the first portion (low hardness portion) and the second portion (high hardness portion) of the electrophotographic photosensitive member 32 passed through the surface layer. Electrophotographic Photosensitive Members 33 to 39 and 202 and 203

Electrophotographic photosensitive members 33 to 39 and 202 and 203 were fabricated in the same manner as in the electrophotographic photosensitive member 32 except that the photomask 1 for use in the fabrication of an electrophotographic photosensitive member was replaced by a photomask listed in Table 8. Table 8 summarizes the area percentage of a second surface region formed of the second portion (high hardness portion) in a 1 mm x 1 mm square region disposed on an arbitrary position of the surface of the surface layer of the electrophotographic photosensitive members 33 to 39 and 202 and 203, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive members 33 to 39 and 202 and 203. In the electrophotographic photosensitive members 33 to 39 and 202 and 203, both the first portion (low hardness portion) and the second portion (high hardness portion) of the surface layer passed through the surface layer. In the electrophotographic photosensitive members 33 to 39 and 202 and 203, a first surface region formed of the first portion (low hardness portion) and the second surface region accounted for 100% by area of the square region. Electrophotographic Photosensitive Member 40

An electrophotographic photosensitive member 40 was fabricated in the same manner as in the electrophotographic photosensitive member 34 except that the electron beam dose after the photomask was placed around the electrophotographic photosensitive member was increased such that the hardness of the first portion (low hardness portion), the hardness of the second portion (high hardness portion), and the ratio of the hardness of the second portion (high hardness portion) to the hardness of the first portion (low hardness portion) were changed as listed in Table 8. Table 8 summarizes the area percentage of a second surface region formed of the second portion (high hardness portion) in a 1 mm x 1 mm square region disposed on an arbitrary position of the surface of the surface layer of the electrophotographic photosensitive member 40, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive member 40. Both the first portion (low hardness portion) and the second portion (high hardness portion) of the electrophotographic photosensitive member 40 passed through the surface layer. A surface region formed of the first portion (low hardness portion) and the second surface region of the electrophotographic photosensitive member 40 accounted for 100% by area of the square region.

**[Table 8]**

| Electrophotographic photosensitive member | Photomask | Second surface region [%] | Hardness of first portion [GPa] | Hardness of second portion [GPa] | Ratio of hardness of second portion to hardness of first portion |
|---|---|---|---|---|---|
| 30 | - | - | - | - | - |
| 31 | - | - | - | - | - |
| 32 | 1 | 15 | 0.20 | 0.74 | 3.7 |
| 33 | 2 | 38 | 0.21 | 0.75 | 3.6 |
| 34 | 3 | 47 | 0.21 | 0.75 | 3.6 |
| 35 | 4 | 66 | 0.20 | 0.74 | 3.7 |
| 36 | 5 | 78 | 0.22 | 0.73 | 3.3 |
| 37 | 6 | 35 | 0.21 | 0.75 | 3.6 |
| 38 | 7 | 25 | 0.21 | 0.76 | 3.6 |
| 39 | 8 | 66 | 0.22 | 0.74 | 3.4 |
| 40 | 3 | 47 | 0.21 | 1.53 | 7.3 |
| | | | | | |
| 202 | 102 | 65 | 0.21 | 0.71 | 3.4 |
| 203 | 103 | 84 | 0.22 | 0.78 | 3.5 |

### Electrophotographic Photosensitive Member 41

1.25 parts by mass of a fluorine-containing resin (trade name: GF-300, manufactured by Toagosei Co., Ltd.) was dissolved in a mixed solvent of 37.5 parts by mass of 1,1,2,2,3,3,4-heptafluorocyclopentane (trade name: Zeorora H, manufactured by Zeon Corp.) and 37.5 parts by mass of 1-propanol. 25 parts by mass of polytetrafluoroethylene particles (trade name: Lubron L-2, manufactured by Daikin Industries, Ltd.) were added as a lubricant to the solution. The mixture was dispersed three times in a high-pressure dispersing apparatus (trade name: Microfluidizer M-110EH, manufactured by Microfluidics) at a pressure of 58.8 MPa (600 kgf/cm2) to prepare a lubricant dispersion liquid.

20 parts by mass of dipentaerythritol hexaacrylate (trade name: Kayarad DPHA, manufactured by Nippon Kayaku Co., Ltd.), 80 parts by mass of the exemplary compound No. 14 (the compound having the structural formula (14)), 45 parts by mass of the lubricant dispersion liquid, 66.7 parts by mass of 1,1,2,2,3,3,4-heptafluorocyclopentane, and 66.7 parts by mass of 1-propanol were agitated and subjected to pressure filtration through a 5-µm polytetrafluoroethylene (PTFE) membrane filter to prepare a coating liquid for a surface layer. The coating liquid for a surface layer was applied to the charge-transport layer of one of the electrophotographic photosensitive members 1 by dip coating and was irradiated with an electron beam such that the coating film had hardness of approximately 0.19 GPa, thus forming the surface layer. Through these processes, a plurality of electrophotographic photosensitive members 41 were fabricated. The electrophotographic photosensitive members 41 had a surface hardness of 0.19 GPa and a surface layer thickness of 3 µm.

### Electrophotographic Photosensitive Member 42

An electrophotographic photosensitive member 42 was fabricated in the same manner as in the electrophotographic photosensitive member 41 except that the coating liquid for a surface layer was irradiated with a higher dose of electron beam and was then subjected to post-baking at 120°C for one hour. The electrophotographic photosensitive member 42 had a surface hardness of 0.74 GPa and a surface layer thickness of 3 µm.

### Electrophotographic Photosensitive Member 43

The photomask 1 for use in the fabrication of an electrophotographic photosensitive member was cut into a piece having a width of 5 cm, which was then placed around one of the electrophotographic photosensitive members 41 as illustrated in Fig. 10 and was again irradiated with an electron beam for electron beam curing. After the photomask was removed, post-baking at 120°C for one hour yielded an electrophotographic photosensitive member 43. In the electrophotographic photosensitive member 43, a first portion (low hardness portion) had hardness of 0.19 GPa, and a second portion (high hardness portion) had hardness of 0.75 GPa. The ratio of the hardness of the second portion (high hardness portion) to the hardness of the first portion (low hardness portion) was 3.9. In a 1 mm x 1 mm square region disposed on an arbitrary position of the surface of the surface layer of the electrophotographic photosensitive member 43, a second surface region formed of the second portion (high hardness portion) accounted for 13% by area of the square region, and a first surface region formed of the first portion (low hardness portion) and the second surface region accounted for 100% by area of the square region.

Both the first portion (low hardness portion) and the second portion (high hardness portion) of the electrophotographic photosensitive member 43 passed through the surface layer. Electrophotographic Photosensitive Members 44 to 58, 62, and 302 and 303

Electrophotographic photosensitive members 44 to 58, 62, and 302 and 303 were fabricated in the same manner as in the electrophotographic photosensitive member 43 except that the photomask for use in the fabrication of an electrophotographic photosensitive member was replaced by a photomask listed in Table 9. Table 9 summarizes the area percentage of a second surface region formed of the second portion (high hardness portion) in a 1 mm x 1 mm square region disposed on an arbitrary position of the surface of the surface layer of the electrophotographic photosensitive members 44 to 58, 62, and 302 and 303, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive members 44 to 58, 62, and 302 and 303. In the electrophotographic photosensitive members 44 to 58, 62, and 302 and 303, both the first portion (low hardness portion) and the second portion (high hardness portion) of the surface layer passed through the surface layer. In the electrophotographic photosensitive members 44 to 58, 62, and 302 and 303, first surface region formed of the first portion (low hardness portion) and the second surface region accounted for 100% by area of the square region. Electrophotographic Photosensitive Member 59

Ten parts by mass of dipentaerythritol hexaacrylate (trade name: Kayarad DPHA, manufactured by Nippon Kayaku Co., Ltd.) and 10 parts by mass of an exemplary compound No. 27 (a compound having the structural formula (27)) were dissolved in a mixed solvent of 60 parts by mass of ethanol and 15 parts by mass of methyl ethyl ketone to prepare a coating liquid for a surface layer. The coating liquid for a surface layer was applied to the charge-transport layer of one of the electrophotographic photosensitive members 1 by dip coating and was irradiated with an electron beam such that the coating film had hardness of approximately 0.10 GPa, thus forming the surface layer. Through these processes, a plurality of electrophotographic photosensitive members 41-2 were fabricated. The electrophotographic photosensitive members 41-2 had a surface hardness of 0.10 GPa and a surface layer thickness of 3 µm.

The photomask 3 for use in the fabrication of an electrophotographic photosensitive member was cut into a piece having a width of 5 cm, which was then placed around one of the electrophotographic photosensitive members 41-2 as illustrated in Fig. 10 and was again irradiated with an electron beam for electron beam curing. After the photomask was removed, post-baking at 120°C for one hour yielded an electrophotographic photosensitive member 59. Table 9 summarizes the area percentage of a second surface region formed of the second portion (high hardness portion) in a 1 mm x 1 mm square region disposed on an arbitrary position of the surface of the surface layer of the electrophotographic photosensitive member 59, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive member 59. Both the first portion (low hardness portion) and the second portion (high hardness portion) of the electrophotographic photosensitive member 59 passed through the surface layer. A surface region formed of the first portion (low hardness portion) and the second surface region of the electrophotographic photosensitive member 59 accounted for 100% by area of the square region.

### Electrophotographic Photosensitive Members 60, 61, and 63

Electrophotographic photosensitive members 60, 61, and 63 were fabricated in the same manner as in the electrophotographic photosensitive member 59 except that the electron beam dose after the photomask was placed around the electrophotographic photosensitive member was increased such that the hardness of the first portion (low hardness portion), the hardness of the second portion (high hardness portion), and the ratio of the hardness of the second portion (high hardness portion) to the hardness of the first portion (low hardness portion) were changed as listed in Table 9. Table 9 summarizes the area percentage of a second surface region formed of the second portion (high hardness portion) in a 1 mm x 1 mm square region disposed on an arbitrary position of the surface of the surface layer of the electrophotographic photosensitive members 60, 61, and 63, as well as the hardness of the first portion (low hardness portion), the hardness of the second portion (high hardness portion), and the ratio of the hardness of the second portion (high hardness portion) to the hardness of the first portion (low hardness portion) of the electrophotographic photosensitive members 60, 61, and 63. In the electrophotographic photosensitive members 60, 61, and 63, both the first portion (low hardness portion) and the second portion (high hardness portion) of the surface layer passed through the surface layer. In the electrophotographic photosensitive members 60, 61, and 63, a first surface region formed of the first portion (low hardness portion) and the second surface region accounted for 100% by area of the square region.

**[Table 9]**

| Electrophotographic photosensitive member | Photomask | Second surface region [%] | Hardness of first portion [GPa] | Hardness of second portion [GPa] | Ratio of hardness of second portion to hardness of first portion |
|---|---|---|---|---|---|
| 41 | - | - | - | - | - |
| 42 | - | - | - | - | - |
| 43 | 1 | 13 | 0.19 | 0.75 | 3.9 |
| 44 | 2 | 38 | 0.20 | 0.75 | 3.8 |
| 45 | 3 | 47 | 0.20 | 0.74 | 3.7 |
| 46 | 4 | 66 | 0.20 | 0.74 | 3.7 |
| 47 | 5 | 78 | 0.19 | 0.73 | 3.8 |
| 48 | 6 | 35 | 0.20 | 0.75 | 3.8 |
| 49 | 7 | 25 | 0.21 | 0.76 | 3.6 |
| 50 | 8 | 63 | 0.20 | 0.75 | 3.8 |
| 51 | 1 | 65 | 0.19 | 1.33 | 7.0 |
| 52 | 2 | 55 | 0.20 | 1.35 | 6.8 |
| 53 | 3 | 35 | 0.19 | 1.32 | 6.9 |
| 54 | 4 | 21 | 0.21 | 1.33 | 6.3 |
| 55 | 5 | 65 | 0.19 | 1.39 | 7.3 |
| 56 | 6 | 77 | 0.20 | 1.37 | 6.9 |
| 57 | 7 | 36 | 0.20 | 1.39 | 7.0 |
| 58 | 8 | 66 | 0.19 | 1.36 | 7.2 |
| 59 | 3 | 48 | 0.19 | 3.20 | 16.8 |
| 60 | 3 | 49 | 0.22 | 4.98 | 22.6 |
| 61 | 3 | 49 | 0.19 | 5.49 | 28.9 |
| 62 | 3 | 7 | 0.22 | 0.25 | 1.1 |
| 63 | 3 | 49 | 0.19 | 6.21 | 32.7 |
| | | | | | |
| 302 | 102 | 65 | 0.21 | 0.71 | 3.4 |
| 303 | 103 | 84 | 0.22 | 0.78 | 3.5 |

### Electrophotographic Photosensitive Member 64

A surface of the electrophotographic photosensitive member 3 was polished with a lapping tape to Rz = 0.5 µm, thus fabricating an electrophotographic photosensitive member 64.

### Electrophotographic Photosensitive Member 65

A surface of the electrophotographic photosensitive member 31 was polished with a lapping tape to Rz = 0.5 µm, thus fabricating an electrophotographic photosensitive member 65.

### Electrophotographic Photosensitive Member 66

One of the electrophotographic photosensitive members 1 was rotated while the electrophotographic photosensitive member 1 was pressed against a metal mold having a depressed portion to form a quadrangular prism raised portion on the surface of the electrophotographic photosensitive member 1 (the quadrangular prism had a 6 µm x 6 µm bottom and a height of 0.2 µm and accounted for 14% by area of a 1 mm x 1 mm square region). Through these processes, an electrophotographic photosensitive member 66 was fabricated.

### Examples 4-1 to 4-6 and Comparative Examples 4-1 to 4-8

Electrophotographic photosensitive members 2 to 10 and 101 to 105 were evaluated.

### Evaluation of Cleaning Blade

The electrophotographic photosensitive members 2 to 10 and 101 to 105 were installed in a monochrome copying machine GP-215 (trade name) manufactured by CANON KABUSHIKI KAISHA. 10,000 sheets of an image were output at a temperature of 30°C and a humidity of 80%RH. The status (blade curling and blade chattering) of a cleaning blade (urethane rubber blade) in contact with (abutting against) an electrophotographic photosensitive member was evaluated. The monochrome copying machine GP-215 (trade name) includes a cleaning unit configured to clean the surface of an electrophotographic photosensitive member. The cleaning unit includes a cleaning blade configured to come into contact with the surface of the electrophotographic photosensitive member.

In Tables 10 to 13, the occurrence of blade curling or blade chattering during the output of 10,000 sheets of an image was indicated by B, and the nonoccurrence of blade curling or blade chattering was indicated by A.

### Evaluation of Friction coefficient

After 10,000 sheets of an image were output, a urethane rubber blade (urethane blade) was made to abut against the electrophotographic photosensitive member at an angle of 26 degrees under a vertical load of 30 g at a friction speed of 100 mm/min as illustrated in Fig. 11, and the friction coefficient under the vertical load was measured with a surface property tester (trade name: Type 14FW) manufactured by Shinto Scientific Co., Ltd. In Fig. 11, 3a denotes the electrophotographic photosensitive member, 3b denotes the urethane rubber blade (urethane blade), and 3c denotes a support for the electrophotographic photosensitive member.

### Evaluation of Abrasion Loss

After 10,000 sheets of an image were output, the abrasion loss of the surface of the electrophotographic photosensitive member was measured with an ultra-high depth shape measurement microscope (trade name: VK-9510) manufactured by Keyence Corp. and an image processor (trade name: Luzex AP) manufactured by Nireco Corp.

Table 10 summarizes the results of Examples 4-1 to 4-6 and Comparative Examples 4-1 to 4-8.

**[Table 10]**

| | Electrophotographic photosensitive member | Blade curling | Blade chattering | Friction coefficient | Abrasion loss [µm] |
|---|---|---|---|---|---|
| Comparative Example 4-1 | 2 | A | B | 1.65 | 1.9 |
| Comparative Example 4-2 | 3 | B | B | 1.85 | 0.7 |
| Example 4-1 | 4 | A | A | 0.88 | 0.65 |
| Example 4-2 | 5 | A | A | 0.77 | 0.6 |
| Example 4-3 | 6 | A | A | 0.76 | 0.45 |
| Example 4-4 | 7 | A | A | 0.65 | 0.48 |
| Example 4-5 | 8 | A | A | 0.63 | 0.65 |
| Example 4-6 | 9 | A | A | 0.66 | 0.73 |
| Comparative Example 4-3 | 10 | A | A | 1.58 | 1.8 |
| Comparative Example 4-4 | 101 | B | B | 0.6 - 1.5 (unstable) | - (unstable) |
| Comparative Example 4-5 | 102 | A | B | 1.35 | 1.2 |
| Comparative Example 4-6 | 103 | B | B | 1.42 | 0.75 |
| Comparative Example 4-7 | 104 | B | B | 0.7 - 1.4 (unstable) | 0.85 |
| Comparative Example 4-8 | 105 | B | B | 1.55 | 0.73 |

Examples 4-1 to 4-6, in which the ratio of the hardness of the second portion to the hardness of the first portion was in the range of 1.2 to 30 and the second surface region accounted for 10% to 80% by area, had a low friction coefficient even after the 10,000 sheets of an image were output.

In Comparative Examples 4-1 and 4-2, which included no first portion and no second portion, the friction decreasing effect due to the difference in height between the first portion and the second portion could not be obtained.

Comparative Example 4-3, in which the ratio of the hardness of the second portion to the hardness of the first portion was less than 1.2, had an insufficient difference in height between the first portion and the second portion and an insufficient friction decreasing effect.

In Comparative Example 4-5, in which the second surface region accounted for less than 10% by area, the contact area between the second surface region and the cleaning blade was small. Thus, the raised second portion was easily broken under the load, and the friction decreasing effect was insufficient.

In Comparative Examples 4-6 and 4-8, in which the second surface region accounted for more than 80% by area, the contact area between the second surface region and the cleaning blade was large. Thus, the friction decreasing effect was insufficient.

In Comparative Examples 4-4 and 4-7, in which the second surface region accounted for less than 10% by area in one area and more than 80% by area in the other area. Thus, the friction decreasing effect was insufficient.

### Examples 4-7 to 4-23 and Comparative Examples 4-9 to 4-10

The electrophotographic photosensitive members 11 to 29 were evaluated in the same manner as in Examples 4-1 to 4-6 and Comparative Examples 4-1 to 4-8.

Table 11 summarizes the results of Examples 4-7 to 4-23 and Comparative Examples 4-9 and 4-10.

**[Table 11]**

| | Electrophotographic photosensitive member | Blade curling | Blade chattering | Friction coefficient | Abrasion loss [µm] |
|---|---|---|---|---|---|
| Comparative Example 4-9 | 11 | A | A | 1.15 | 1.45 |
| Comparative Example 4-10 | 12 | A | B | 1.45 | 0.61 |
| Example 4-7 | 13 | A | A | 0.62 | 0.48 |
| Example 4-8 | 14 | A | A | 0.54 | 0.45 |
| Example 4-9 | 15 | A | A | 0.43 | 0.44 |
| Example 4-10 | 16 | A | A | 0.55 | 0.44 |
| Example 4-11 | 17 | A | A | 0.54 | 0.43 |
| Example 4-12 | 18 | A | A | 0.50 | 0.48 |
| Example 4-13 | 19 | A | A | 0.61 | 0.48 |
| Example 4-14 | 20 | A | A | 0.50 | 0.41 |
| Example 4-15 | 21 | A | A | 0.51 | 0.35 |
| Example 4-16 | 22 | A | A | 0.48 | 0.35 |
| Example 4-17 | 23 | A | A | 0.53 | 0.34 |
| Example 4-18 | 24 | A | A | 0.60 | 0.38 |
| Example 4-19 | 25 | A | A | 0.52 | 0.29 |
| Example 4-20 | 26 | A | A | 0.62 | 0.28 |
| Example 4-21 | 27 | A | A | 0.50 | 0.27 |
| Example 4-22 | 28 | A | A | 0.52 | 0.28 |
| Example 4-23 | 29 | A | A | 0.56 | 0.19 |

### Examples 4-24 to 4-32 and Comparative Examples 4-11 to 4-15

The electrophotographic photosensitive members 30 to 40 and 202 and 203 were evaluated in the same manner as in Examples 4-1 to 4-6 and Comparative Examples 4-1 to 4-8 except that the electrophotographic apparatus was changed from the monochrome copying machine GP-215 (trade name) manufactured by CANON KABUSHIKI KAISHA to a monochrome copying machine GP-405 (trade name) manufactured by CANON KABUSHIKI KAISHA and that the number of output sheets was changed from 10,000 to 20,000. The monochrome copying machine GP-405 (trade name) also includes a cleaning unit configured to clean the surface of an electrophotographic photosensitive member. The cleaning unit includes a cleaning blade configured to come into contact with the surface of the electrophotographic photosensitive member.

Table 12 summarizes the results of Examples 4-24 to 4-32 and Comparative Examples 4-11 to 4-15.

**[Table 12]**

| | Electrophotographic photosensitive member | Blade curling | Blade chattering | Friction coefficient | Abrasion loss [µm] |
|---|---|---|---|---|---|
| Comparative Example 4-11 | 30 | A | B | 1.21 | 1.35 |
| Comparative Example 4-12 | 31 | B | B | 1.88 | 0.25 |
| Example 4-24 | 32 | A | A | 0.95 | 0.25 |
| Example 4-25 | 33 | A | A | 0.87 | 0.21 |
| Example 4-26 | 34 | A | A | 0.83 | 0.22 |
| Example 4-27 | 35 | A | A | 0.84 | 0.23 |
| Example 4-28 | 36 | A | A | 0.89 | 0.21 |
| Example 4-29 | 37 | A | A | 0.9 | 0.24 |
| Example 4-30 | 38 | A | A | 0.94 | 0.23 |
| Example 4-31 | 39 | A | A | 0.84 | 0.24 |
| Example 4-32 | 40 | A | A | 0.83 | 0.18 |
| Comparative Example 4-14 | 202 | A | B | 1.35 | 1.2 |
| Comparative Example 4-15 | 203 | A | B | 1.11 | 0.75 |

### Examples 4-33 to 4-51 and Comparative Examples 4-16 to 4-25

The electrophotographic photosensitive members 41 to 63 and 302 and 303 were evaluated in the same manner as in Examples 4-24 to 4-32 and Comparative Examples 4-11 to 4-15.

Table 13 summarizes the results of Examples 4-33 to 4-51 and Comparative Examples 4-16 to 4-25.

**[Table 13]**

| | Electrophotographic photosensitive member | Blade curling | Blade chattering | Friction coefficient | Abrasion loss [µm] |
|---|---|---|---|---|---|
| Comparative Example 4-16 | 41 | A | B | 1.15 | 1.21 |
| Comparative Example 4-17 | 42 | A | B | 1.48 | 0.21 |
| Example 4-33 | 43 | A | A | 0.62 | 0.24 |
| Example 4-34 | 44 | A | A | 0.50 | 0.22 |
| Example 4-35 | 45 | A | A | 0.49 | 0.23 |
| Example 4-36 | 46 | A | A | 0.60 | 0.24 |
| Example 4-37 | 47 | A | A | 0.68 | 0.25 |
| Example 4-38 | 48 | A | A | 0.54 | 0.26 |
| Example 4-39 | 49 | A | A | 0.55 | 0.20 |
| Example 4-40 | 50 | A | A | 0.57 | 0.23 |
| Example 4-41 | 51 | A | A | 0.57 | 0.24 |
| Example 4-42 | 52 | A | A | 0.52 | 0.17 |
| Example 4-43 | 53 | A | A | 0.52 | 0.16 |
| Example 4-44 | 54 | A | A | 0.59 | 0.18 |
| Example 4-45 | 55 | A | A | 0.58 | 0.19 |
| Example 4-46 | 56 | A | A | 0.63 | 0.17 |
| Example 4-47 | 57 | A | A | 0.53 | 0.15 |
| Example 4-48 | 58 | A | A | 0.62 | 0.14 |
| Example 4-49 | 59 | A | A | 0.48 | 0.12 |
| Example 4-50 | 60 | A | A | 0.49 | 0.11 |
| Example 4-51 | 61 | A | A | 0.48 | 0.10 |
| Comparative Example 4-18 | 62 | A | B | 1.02 | 1.08 |
| Comparative Example 4-19 | 63 | A | B | 0.78 | 0.08 |
| Comparative Example 4-20 | 64 | A | B | 1.25 | 3.80 |
| Comparative Example 4-21 | 65 | A | B | 1.24 | 3.70 |
| Comparative Example 4-22 | 66 | A | B | 1.23 | 3.40 |
| Comparative Example 4-24 | 302 | A | B | 0.87 | 0.33 |
| Comparative Example 4-25 | 303 | A | B | 0.84 | 0.24 |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Applications No. 2011-088442, filed April 12, 2011, No. 2011-094158, filed April 20, 2011, No. 2011-110620, filed May 17, 2011, No. 2012-053581, filed March 9, 2012, and No. 2012-085035, filed April 3, 2012.

## Claims

1. A film, comprising a first portion and a second portion having different hardnesses, wherein the first portion has hardness (H₁ [GPa]) in the range of 0.01 to 3 GPa as determined by a continuous stiffness measurement in accordance with the description, and the ratio (H₂/H₁) of the hardness (H₂ [GPa]) of the second portion as determined by the continuous stiffness measurement in accordance with the description to the hardness (H₁ [GPa]) of the first portion as determined by the continuous stiffness measurement in accordance with the description is in the range of 1.2 to 30,
the first portion forms a first surface region of the film, and the second portion forms a second surface region of the film,
each of the first portion and the second portion extends to a depth of 75% or more of the thickness of the film, and
in a 1 mm x 1 mm square region disposed on an arbitrary position of the surface of the film, the second surface region accounts for 10% to 80% by area of the square region, and the first surface region and the second surface region account for 50% or more by area of the square region.

2. The film according to Claim 1, wherein the first portion and the second portion are formed of an ultraviolet-curable resin.

3. The film according to Claim 1 or 2, wherein the second portion passes through the film.

4. The film according to any one of Claims 1 to 3, wherein in a 1 mm x 1 mm square region disposed on an arbitrary position of the surface of the film the first surface region and the second surface region account for 100% by area of the square region.

5. The film according to any one of Claims 1 to 4, wherein the first surface region on the surface of the film is surrounded by the second surface region.

6. The film according to any one of Claims 1 to 5, wherein the film contains a lubricant.

7. An apparatus, comprising: a member containing the film according to any one of Claims 1 to 6; and a contact member configured to come into contact with a surface of the film at a certain speed.

8. An electrophotographic photosensitive member, comprising the film according to any one of Claims 1 to 6 as a surface layer.

9. A process cartridge detachably attachable to a main body of an electrophotographic apparatus, the process cartridge supporting:
an electrophotographic photosensitive member, and
a cleaning unit for cleaning a surface of the electrophotographic photosensitive member,
wherein,
the electrophotographic photosensitive member is the electrophotographic photosensitive member according to Claim 8, and
the cleaning unit has a cleaning blade coming into contact with the surface of the electrophotographic photosensitive member.

10. An electrophotographic apparatus, comprising:
an electrophotographic photosensitive member,
a charging unit,
an exposure unit,
a developing unit,
a transfer unit, and
a cleaning unit for cleaning a surface of the electrophotographic photosensitive member,
wherein,
the electrophotographic photosensitive member is the electrophotographic photosensitive member according to Claim 8, and
the cleaning unit has a cleaning blade coming into contact with the surface of the electrophotographic photosensitive member.

## Patentansprüche

1. Film, der einen ersten Abschnitt und einen zweiten Abschnitt mit unterschiedlicher Härte umfasst, wobei der erste Abschnitt eine Härte (H₁ [GPa]) in dem Bereich von 0,01 bis 3 GPa, wie durch eine kontinuierliche Steifheitsmessung gemäß der Beschreibung bestimmt, aufweist, und das Verhältnis (H₂/H₁) der Härte (H₂ [GPa]) des zweiten Abschnitts, wie durch die kontinuierliche Steifheitsmessung gemäß der Beschreibung gemessen, zu der Härte (H₁ [GPa]) des ersten Abschnitts, wie durch die kontinuierliche Steifheitsmessung gemäß der Beschreibung gemessen, in dem Bereich von 1,2 bis 30 liegt,
wobei der erste Abschnitt einen ersten Oberflächenbereich des Films bildet und der zweite Abschnitt einen zweiten Oberflächenbereich des Films bildet,
jeder aus dem ersten Abschnitt und dem zweiten Abschnitt sich in eine Tiefe von 75% oder mehr der Dicke des Films erstreckt, und
in einem 1 mm x 1 mm quadratischen Bereich, der auf einer beliebigen Position der Oberfläche des Films angeordnet ist, der zweite Oberflächenbereich 10 Flächen-% bis 80 Flächen-% des quadratischen Bereichs ausmacht, und der erste Oberflächenbereich und der zweite Oberflächenbereich 50 Flächen-% oder mehr des quadratischen Bereichs ausmachen.

2. Film nach Anspruch 1, wobei der erste Abschnitt und der zweite Abschnitt aus einem Ultraviolett-härtbaren Harz gebildet sind.

3. Film nach Anspruch 1 oder 2, wobei der erste Abschnitt durch den Film hindurch tritt.

4. Film nach einem der Ansprüche 1 bis 3, wobei in einem 1 mm x 1 mm quadratischen Bereich, der auf einer beliebigen Position der Oberfläche des Films angeordnet ist, der erste Oberflächenbereich und der zweite Oberflächenbereich 100 Flächen-% des quadratischen Bereichs ausmachen.

5. Film nach einem der Ansprüche 1 bis 4, wobei der erste Oberflächenbereich auf der Oberfläche des Films von dem zweiten Oberflächenbereich umgeben ist.

6. Film nach einem der Ansprüche 1 bis 5, wobei der Film ein Gleitmittel enthält.

7. Apparat, der umfasst: ein Element, das den Film nach einem der Ansprüche 1 bis 6 enthält; und ein Kontaktelement, das dazu konfiguriert ist, mit einer Oberfläche des Films mit einer gewissen Geschwindigkeit in Kontakt zu kommen.

8. Elektrophotographisches photosensitives Element, das den Film nach einem der Ansprüche 1 bis 6 als eine Oberflächenschicht umfasst.

9. Prozesskartusche, die abnehmbar an einen Hauptkörper eines elektrophotographischen Apparats anbringbar ist, wobei die Prozesskartusche stützt:
ein elektrophotographisches photosensitives Element, und
eine Reinigungseinheit zum Reinigen einer Oberfläche des elektrophotographischen photosensitiven Elements,
wobei,
das elektrophotographische photosensitive Element das elektrophotographische photosensitive Element nach Anspruch 8 ist, und
die Reinigungseinheit einen Reinigungsabstreifer aufweist, der mit der Oberfläche des elektrophotographischen photosensitiven Elements in Kontakt kommt.

10. Elektrophotographischer Apparat, der umfasst:
ein elektrophotographisches photosensitives Element,
eine Ladeeinheit,
eine Belichtungseinheit,
eine Entwicklereinheit,
eine Transfereinheit, und
eine Reinigungseinheit zum Reinigen der Oberfläche des elektrophotographischen photosensitiven Elements,
wobei,
das elektrophotographische photosensitive Element das elektrophotographische photosensitive Element nach Anspruch 8 ist, und
die Reinigungseinheit einen Reinigungsabstreifer aufweist, der mit der Oberfläche des elektrophotographischen photosensitiven Elements in Kontakt kommt.

## Revendications

1. Film, comprenant une première partie et une seconde partie ayant des duretés différentes, dans lequel la première partie a la dureté (H₁ [GPa]) dans la plage de 0,01 à 3 GPa telle que déterminée par une mesure de rigidité continue selon la description, et le rapport (H₂/H₁) de la dureté (H₂ [GPa]) de la seconde partie telle que déterminée par la mesure de rigidité continue selon la description, sur la dureté (H₁ [GPa]) de la première partie telle que déterminée par la mesure de rigidité continue selon la description est dans la plage de 1,2 à 30,
la première partie forme une première région de surface du film, et la seconde partie forme une seconde région de surface du film,
chacune parmi la première partie et la seconde partie s'étend jusqu'à une profondeur de 75 % ou plus de l'épaisseur du film, et
dans une région carrée de 1 mm × 1 mm disposée dans une position arbitraire de la surface du film, la seconde région de surface représente de 10 % à 80 % en surface de la région carrée, et la première région de surface et la seconde région de surface représente 50 % ou plus en surface de la région carrée.

2. Film selon la revendication 1, dans lequel la première partie et la seconde partie sont formées avec une résine durcissable aux ultraviolets.

3. Film selon la revendication 1 ou 2, dans lequel la seconde partie passe à travers le film.

4. Film selon l'une quelconque des revendications 1 à 3, dans lequel dans une région carrée de 1 mm × 1 mm disposée dans une position arbitraire de la surface du film, la première région de surface et la seconde région de surface représentent 100 % en surface de la région carrée.

5. Film selon l'une quelconque des revendications 1 à 4, dans lequel la première région de surface sur la surface du film est entourée par la seconde région de surface.

6. Film selon l'une quelconque des revendications 1 à 5, dans lequel le film contient un lubrifiant.

7. Appareil comprenant : un élément contenant le film selon l'une quelconque des revendications 1 à 6 ; et un élément de contact configuré pour venir en contact avec une surface du film à une certaine vitesse.

8. Elément photosensible électrophotographique comprenant le film selon l'une quelconque des revendications 1 à 6 en tant que couche de surface.

9. Cartouche de traitement pouvant être fixée de manière détachable sur un corps principal de l'appareil électrophotographique, la cartouche de traitement supportant :
un élément photosensible électrophotographique, et
une unité de nettoyage pour nettoyer une surface de l'élément photosensible électrophotographique,
dans laquelle
l'élément photosensible électrophotographique est l'élément photosensible électrophotographique selon la revendication 8, et
l'unité de nettoyage a une lame de nettoyage venant en contact avec la surface de l'élément photosensible électrophotographique.

10. Appareil électrophotographique, comprenant :
un élément photosensible électrophotographique,
une unité de charge,
une unité d'exposition,
une unité de développement,
une unité de transfert, et
une unité de nettoyage pour nettoyer une surface de l'élément photosensible électrophotographique,
dans lequel
l'élément photosensible électrophotographique est l'élément photosensible électrophotographique selon la revendication 8, et
l'unité de nettoyage a une lame de nettoyage venant en contact avec la surface de l'élément photosensible électrophotographique.
